# EUROPÄISCHE PATENTSCHRIFT

(11) **EP 2 367 833 B1**
(45) Veröffentlichungstag und Bekanntmachung des Hinweises auf die Patenterteilung: **28.08.2013**
(21) Anmeldenummer: 09736137.2
(22) Anmeldetag: 06.10.2009
(51) Int. Cl.: C07F 9/30, C07F 9/48, C08K 5/53, C09K 21/12

(54) **VERFAHREN ZUR HERSTELLUNG VON MONO-CARBOXYFUNKTIONALISIERTEN DIALKYLPHOSPHINSÄUREN, -ESTERN UND -SALZEN MITTELS ACRYLNITRILEN UND IHRE VERWENDUNG**
METHOD FOR PRODUCING MONO-CARBOXY-FUNCTIONALIZED DIALKYLPHOSPHINIC ACIDS AND ESTERS AND SALTS THEREOF BY MEANS OF ACRYLNITRILES AND USE THEREOF
PROCÉDÉ POUR PRODUIRE DES ACIDES, DES ESTERS ET DES SELS DIALKYLPHOSPHINIQUES À FONCTIONNALISATION MONOCARBOXY, AU MOYEN D'ACRYLONITRILES ET LEUR UTILISATION

(30) Priorität: 07.11.2008 DE 102008056342
(43) Veröffentlichungstag der Anmeldung: 28.09.2011
(73) Patentinhaber: Clariant Finance (BVI) Limited, Road Town, Tortola (VG)
(72) Erfinder: HILL, Michael, 22043 Hamburg (DE); KRAUSE, Werner, 50354 Hürth (DE); SICKEN, Martin, 51149 Köln (DE)
(74) Vertreter: Paczkowski, Marcus
(86) Internationale Anmeldenummer: PCT/EP2009/007131
(87) Internationale Veröffentlichungsnummer: WO 2010/051891

(56) Entgegenhaltungen:
- EP-A1- 1 832 594
- EP-A1- 1 832 595
- EP-A1- 1 832 596
- US-A- 4 594 199
- US-B1- 6 384 022
- MONTCHAMP J L: "Recent advances in phosphorus-carbon bond formation: synthesis of H-phosphinic acid derivatives from hypophosphorous compounds" JOURNAL OF ORGANOMETALLIC CHEMISTRY, ELSEVIER-SEQUOIA S.A. LAUSANNE, CH, Bd. 690, Nr. 10, 16. Mai 2005 (2005-05-16) , Seiten 2388-2406, XP004877374 ISSN: 0022-328X
- SYLVINE DEPRÈLE ET AL: "Palladium-Catalyzed Hydrophosphinylation of Alkenes and Alkynes" JOURNAL OF THE AMERICAN CHEMICAL SOCIETY, AMERICAN CHEMICAL SOCIETY, WASHINGTON, DC. US, Bd. 124, Nr. 32, 1. Januar 2002 (2002-01-01), Seite 9387, XP002500862 ISSN: 0002-7863
- BRAVO-ALTAMIRANO ET AL: "A novel approach to phosphonic acids from hypophosphorous acid" TETRAHEDRON LETTERS, ELSEVIER, AMSTERDAM, NL, Bd. 48, Nr. 33, 19. Juli 2007 (2007-07-19) , Seiten 5755-5759, XP022163552 ISSN: 0040-4039
- SYLVINE DEPRÈLE ET AL: "Environmentally Benign Synthesis of H-Phosphinic Acids Using a Water-Tolerant, Recyclable Polymer-Supported Catalyst" ORGANIC LETTERS, AMERICAN CHEMICAL SOCIETY, US, Bd. 6, Nr. 21, 1. Januar 2004 (2004-01-01) , Seiten 3805-3808, XP002500861 ISSN: 1523-7060 [gefunden am 2004-09-18]
- PATRICE RIBIÈRE ET AL: "NiCl2-Catalyzed Hydrophosphinylation" JOURNAL OF ORGANIC CHEMISTRY, AMERICAN CHEMICAL SOCIETY, EASTON.; US, Bd. 70, Nr. 10, 1. Januar 2005 (2005-01-01), Seiten 4064-4072, XP002530191 ISSN: 0022-3263
- FROESTL W ET AL: "PHOSPHINIC ACID ANALOGUES OF GABA. 2. SELECTIVE, ORALLY ACTIVE GABAB ANTAGONISTS" JOURNAL OF MEDICINAL CHEMISTRY, AMERICAN CHEMICAL SOCIETY, WASHINGTON, US, Nr. 17, 1. Januar 1995 (1995-01-01), Seiten 3313-3331, XP000999491 ISSN: 0022-2623

## Beschreibung

Die Erfindung betrifft ein Verfahren zur Herstellung von Dialkylphosphinsäuren, -estern und -salzen mittels Acrylnitrilen und ihre Verwendung.

Von bestimmten Dialkylphosphinsäuren, den sog. mono-carboxyfunktionalisierten Dialkylphosphinsäuren, wie sie weiter unten definiert sind, sind bisher fast ausschließlich die Ester zugänglich. Letztere können über mehrere Schritte ausgehend von Phosphonigsäuredihalogeniden hergestellt werden. Hierzu gehört die Umsetzung von Dihalogenphosphinen mit aktivierten olefinischen Verbindungen wie Acrylsäure, gefolgt von der Veresterung der zunächst gebildeten Säurechlorid- und Anhydrid-Derivate mit Alkoholen (V.K. Khairullin, R. R. Shagidullin, Zh. Obshch. Khim. 36, 289-296).

Dialkylphosphinsäuren im Sinne der vorliegenden Erfindung sind also immer mono-carboxyfunktionalisierten Dialkylphosphinsäuren, auch wenn dies nicht ausdrücklich erwähnt ist. Dies schließt die entsprechenden Ester und Salze mit ein.

Solche Dialkylphosphinsäureester werden auch erhalten, wenn man Phosphonigsäureester in Gegenwart peroxidischer Katalysatoren an α,ß-ungesättigte Carbonsäure-ester addiert (Houben-Weyl, Band 1211, S. 258-259). Die Phosphonigsäureester selbst werden aus Phosphonigsäuredihalogeniden durch Umsetzung mit Alkoholen bzw. Hydrolyse und anschließender Veresterung hergestellt. Die vorgenannten Phosphonigsäuredihalogenide selbst werden in einer aufwendigen Synthese aus Phosphortrichlorid und Alkylchlorid in Gegenwart von Aluminiumchlorid hergestellt (Houben-Weyl, Band 1211, S. 306). Die Reaktion ist stark exotherm und technisch nur schwierig zu beherrschen. Es werden zudem verschiedene Nebenprodukte gebildet, die, wie zum Teil auch die vorgenannten Ausgangsprodukte, giftig undloder korrosiv, also höchst unerwünscht sind (insbesondere weil die Produkte nicht halogenfrei hergestellt werden können).

Nach S. Depréle et al., J. Am. Chem. Soc., Bd. 124, Nr. 32, 01.01.2002, Seite 9387, wird hypophosphorige Säure in wässriger Form mit Olefinen, die mindestens 8 C-Atome aufweisen oder mit Alkinen, die ebenfalls mindestens 8 C-Atome aufweisen zu den entsprechenden P-Verbindungen, die dann ebenfalls mindestens 8 C-Atome enthalten, umgesetzt.

Die Reaktion von ausschließlich hypophosphoriger Säure in flüssiger Form mit Kohlenstoffverbindungen, die mindestens 8 C-Atome aufweisen und eine C = C- oder C ≡ C-Verbindung enthalten, wird durch S. Depréle et al., in Org. Lett., Bd. 6, Nr. 21, 01.01.2004, Seiten 3805 - 3808 beschrieben. Erhalten werden P-Verbindungen, die eine Alkylgruppe mit mindestens 8 C-Atomen aufweisen.

Ein weiteres Verfahren zur Herstellung von mono-carboxyfunktionalisierten Dialkylphosphinsäureestern basiert auf der Umsetzung von gelbem Phosphor mit Methylchlorid, wobei Methylphosphonigsäure entsteht, die in dann verestert und daraufhin mit Acrylsäureester umgesetzt wird (DE-A-101 53 780).

Mono-carboxyfunktionalisierte Dialkylphosphinsäureester können auch durch Umsetzung von Phosphonigsäure- Bis(trimethylsilyl)ester - HP(OSiMe₃)₂ - mit α,ß-ungesättigten Carbonsäure-Komponenten, anschließender Alkylierung mit Alkylhalogeniden nach der Arbuzov-Reaktion und Alkoholyse erhalten werden (Kurdyumova, N. R.; Rozhko, L. F.; Ragulin, V. V.; Tsvetkov, E. N.; Russian Journal of General Chemistry (Translation of Zhurnal Obshchei Khimii (1997), 67(12), 1852-1856). Der Phosphonigsäure-Bis(trimethylsilyl)ester wird dabei aus Kalium- oder Ammoniumhypophosphit durch Umsetzung mit Hexamethyldisilazan erhalten.

Bisher fehlt es an Verfahren zur Herstellung von mono-carboxyfunktionalisierten Dialkylphosphinsäuren, -estern und -salzen, die wirtschaftlich und großtechnisch zugänglich sind und die insbesondere eine hohe Raum-/Zeitausbeute ermöglichen. Auch fehlt es an Verfahren, die ohne störende Halogenverbindungen als Edukte ausreichend effektiv sind und zudem an solchen, bei denen die Endprodukte leicht erhalten bzw. isoliert werden können oder auch unter gezielten Reaktionsbedingungen (wie etwa einer Umesterung) gezielt und gewünscht hergestellt werden können.

Diese Aufgabe wird gelöst durch ein Verfahren zur Herstellung von zur Herstellung von mono-carboxyfunktionalisierten Dialkylphosphinsäuren, -estern und -salzen, dadurch gekennzeichnet, dass man
a) eine Phosphinsäurequelle (I) 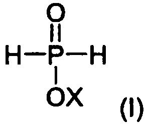 mit Olefinen (IV) 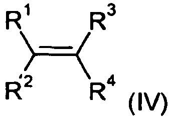 in Gegenwart eines Katalysators A zu einer Alkylphosphonigsäure, deren Salz oder Ester (II) 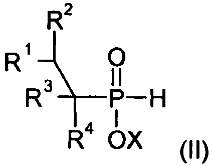 umsetzt,
b) die so entstandene Alkylphosphonigsäure, deren Salz oder Ester (II) mit einem Acrylnitril (V) 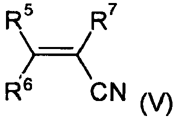 in Gegenwart eines Katalysators B zum mono-funktionalisierten Dialkylphosphinsäurederivat (VI) umsetzt 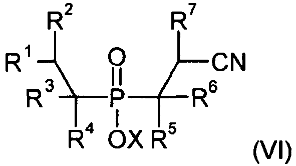 und
c) das mono-funktionalisierten Dialkylphosphinsäurederivat (VI) in Gegenwart eines Katalysators C zum mono-carboxyfunktionalisierten Dialkylphosphinsäurederivat (III) 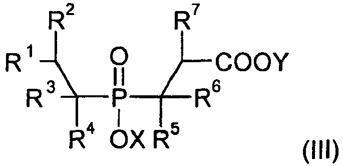 umsetzt oder die nach Schritt a) erhaltene Alkylphosphonigsäure, deren Salz oder Ester (II) und/oder die nach Schritt b) erhaltene mono-funktionalisierte

Dialkylphosphinsäure, deren Salz oder Ester (VI) und/oder die nach Schritt c) erhaltene mono-carboxyfunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und der jeweils entstandene Alkylphosphonigsäureester (II), monofunktionalisierte Dialkylphosphinsäurester (VI) und/oder mono-carboxyfunktionalisierten Dialkylphosphinsäurester (III) dem weiteren Reaktionsschritt b) unterwirft, wobei R¹, R², R³, R⁴, R⁵, R⁶, R⁷ gleich oder verschieden sind und unabhängig voneinander H, Methyl, Ethyl, n-Propyl, Isopropyl, n-Butyl, Isobutyl und/oder tert. Butyl bedeuten und X und Y gleich oder verschieden sind und unabhängig voneinander für H, C₁-C₁₈-Alkyl, C₆-C₁₈-Aryl, C₆-C₁₈-Aralkyl, C₆-C₁₈-Alkyl-Aryl und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase stehen und es sich bei den Katalysatoren A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen und/oder um Alkali- und/oder Erdalkalimetalle, -hydride und/oder -alkoholate und es sich bei dem Katalysator C um eine Säure oder eine Base handelt.

Bevorzugt wird die nach Schritt c) erhaltene mono-carboxyfunktionalisierte Dialkylphosphinsäure, deren Salz oder Ester (III) anschließend in einem Schritt d) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-carboxyfunktionalisierten Dialkyl-phosphinsäuresalzen (III) dieser Metalle und/oder einer Stickstoffverbindung umgesetzt.

Bevorzugt sind X und Y gleich oder verschieden und bedeuten jeweils H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin.

Bevorzugt handelt es sich bei den Übergangsmetallen und/oder Übergangsmetallverbindungen um solche aus der siebten und achten Nebengruppe.

Bevorzugt handelt es sich bei den Übergangsmetallen und/oder Übergangsmetallverbindungen um Rhodium, Nickel, Palladium, Platin und/oder Ruthenium.

Bevorzugt handelt es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid und/oder um Lithium, Lithiumhydrid, Lithium-aluminiumhydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat und/oder Kaliumbutylat.

Bevorzugt handelt es sich bei dem Katalysator C um Metalle, Metallhydride, Metallhydroxide und Metallalkoholate und Mineralsäuren, beispielsweise Schwefel-, Salpeter-, Salz,- Phosphorsäure oder Mischungen davon.

Bevorzugt handelt es sich bei den Acrylnitrilen (V) um Acrylnitril, Methacrylnitril, Ethyl-2-cyanoacrylat, 3-Phenylacrylnitril, 2-Methyl-2-butennitril.

Bevorzugt handelt es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈.

Die Erfindung betrifft auch die Herstellung von mono-carboxyfunktionalisierten Dialkylphosphinsäuren, -estern und -salzen nach einem oder mehreren der Ansprüche 1 bis 9 und anschließende Verwendung dieser Produkte als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen.

Die mono-carboxyfunktionalisierten Dialkylphosphinsäuren, -salzen und -estern, die nach einem oder mehreren der Ansprüche 1 bis 9 hergestellt wurden, können als Flammschutzmittel, insbesondere als Flammschutzmittel für Klarlacke und Intumeszenzbeschichtungen, als Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung eingesetzt werden.

Die Erfindung betrifft zudem eine flammgeschützte thermoplastische oder duroplastische Polymerformmasse, enthaltend 0,5 bis 45 Gew.-% mono-carboxyfunktionalisierte Dialkylphosphinsäuren, -salze oder -ester, die nach einem oder mehreren der Ansprüche 1 bis 9 hergestellt wurden, 0,5 bis 95 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft außerdem flammgeschützte thermoplastische oder duroplastische Polymer-Formkörper, -Filme,- Fäden und -Fasern, enthaltend 0,5 bis 45 Gew.-% mono-carboxyfunktionalisierte Dialkylphosphinsäuren, -salze oder -ester, die nach einem oder mehreren der Ansprüche 1 bis 9 hergestellt wurden, 0,5 bis 95 Gew.-% thermoplastisches oder duroplastisches Polymer oder Mischungen derselben, 0 bis 55 Gew.-% Additive und 0 bis 55 Gew.% Füllstoff bzw. Verstärkungsmaterialien, wobei die Summe der Komponenten 100 Gew.-% beträgt.

Bevorzugt wird das Katalysatorsystem A durch Umsetzung von einem Übergangsmetall und/oder einer Übergangsmetallverbindung und mindestens einem Liganden gebildet.

Alle vorgenannten Umsetzungen können auch stufenweise ausgeführt werden; ebenso können in den verschiedenen Verfahrensschritten auch die jeweiligen resultierenden Reaktionslösungen eingesetzt werden.

Handelt es sich bei der mono-carboxyfunktionalisierter Dialkylphosphinsäure (III) nach Schritt c) um einen Ester, so kann bevorzugt eine saure oder basische Hydrolyse durchgeführt werden, um die freie mono-carboxyfunktionalisierte Dialkylphosphinsäure oder deren Salz zu erhalten.

Bevorzugt handelt es sich bei der mono-carboxyfunktionalisierten Dialkylphosphinsäure um 3-(Ethylhydroxyphosphinyl)-propionsäure, 3-(Propylhydroxyphos-phinyl)-propionsäure, 3-(i-Propylhydroxyphosphinyl)-propionsäure, 3-(Butylhydroxyphosphinyl)-propionsäure, 3-(sec-Butylhydroxyphosphinyl)-propionsäure, 3-(i-Butylhydroxyphosphinyl)-propionsäure, 3-(2-Phenylethylhydroxyphosphinyl)-propionsäure, 3-(Ethylhydroxyphosphinyl)-2-methylpropionsäure, 3-(Propylhydroxyphosphinyl)-2-methylpropionsäure, 3-(i-Propylhydroxyphosphinyl)-2-methylpropionsäure, 3-(Butylhydroxyphosphinyl)-2-methylpropionsäure, 3-(sec-Butylhydroxyphosphinyl)-2-methylpropionsäure, 3-(i-Butylhydroxyphosphinyl)-2-methylpropionsäure, 3-(2-Phenylethylhydroxyphosphinyl)-2-methylpropionsäure, 3-(Ethylhydroxyphosphinyl)-3-phenylpropionsäure, 3-(Propylhydroxyphosphinyl)-3-phenylpropionsäure, 3-(i-Propylhydroxyphosphinyl)-3-phenylpropionsäure, 3-(Butylhydroxyphosphinyl)-3-phenylpropionsäure, 3-(i-Butylhydroxyphosphinyl)-3-phenylpropionsäure, 3-(sec-Butylhydroxyphosphinyl)-3-phenylpropionsäure, 3-(2-Phenylethylhydroxyphosphinyl)-3-phenylpropionsäure.

Bevorzugt handelt es sich bei den herzustellenden Zielverbindungen auch um mono-carboxyfunktionalisierte Dialkylphosphinsäureester, wie Propionsäure-, Methyl-, Ethyl-; i-Propyl-; Butyl-, Phenyl-; 2-Hydroxyethyl-, 2-Hydroxypropyl-, 3-Hydroxypropyl-, 4-Hydroxybutyl- und/oder 2,3-Dihydroxypropylester der vorgenannten mono-carboxyfunktionalisierten Dialkylphosphinsäuren oder Mischungen davon.

Bevorzugt handelt es sich bei den herzustellenden Zielverbindungen auch um mono-carboxyfunktionalisierte Dialkylphosphinsäure-Salze, wie Aluminium(III)-, Calcium(II)-, Magnesium (II)-, Cer(III)-, Ti(IV)- und/oder Zink(II)salze der vorgenannten mono-carboxyfunktionalisierten Dialkylphosphinsäuren oder der vorgenannten Ester der mono-carboxyfunktionalisierten Dialkylphosphinsäuren.

Dabei gelten als Zielverbindungen auch diejenigen Ester und Salze, bei denen die Veresterung bzw. die Salzbildung an der Phosphinsäuregruppe (bei X in Formel (III)) oder an der Propionsäuregruppe (bei Y in Formel (III)) erfolgt.

Bevorzugt handelt es sich bei den Übergangsmetallen für den Katalysator A um Elemente der siebten und achten Nebengruppe (nach moderner Nomenklatur ein Metall der Gruppe 7, 8, 9 oder 10), wie etwa Rhenium, Ruthenium, Cobalt, Rhodium, Iridium, Nickel, Palladium und Platin.

Bevorzugt werden als Quelle der Übergangsmetalle und
Übergangsmetallverbindungen deren Metallsalze verwendet. Geeignete Salze sind solche von Mineralsäuren, die die Anionen Fluorid, Chlorid, Bromid, Iodid, Fluorat, Chlorat, Bromat, Iodat, Fluorit, Chlorit, Bromit, lodit, Hypofluorit, Hypochlorit, Hypobromit, Hypoiodit, Perfluorat, Perchlorat, Perbromat, Periodat, Cyanid, Cyanat, Nitrat, Nitrid, Nitrit, Oxid, Hydroxid, Borat, Sulfat, Sulfit, Sulfid, Persulfat, Thiosulfat, Sulfamat, Phosphat, Phosphit, Hypophosphit, Phosphid, Carbonat und Sulfonat, wie etwa Methansulfonat, Chlorosulfonat, Fluorosulfonat, Trifluoromethansulfonat, Benzolsulfonat, Naphthylsulfonat, Toluolsulfonat, t-Butylsulfonat, 2-Hydroxypropansulfonat und sulfonierte Ionentauscherharze; und/oder organische Salze, wie etwa Acetyl-acetonate und Salze einer Carbonsäure mit bis zu 20 Kohlenstoffatomen, wie etwa Format, Acetat, Propionat, Butyrat, Oxalat, Stearat und Zitrat einschliesslich halogenierter Carbonsäuren mit bis zu 20 Kohlenstoffatomen, wie etwa Trifluoracetat, Trichloracetat, enthalten.
Eine weitere Quelle der Übergangsmetalle und Übergangsmetallverbindungen stellen Salze der Übergangsmetalle mit Tetraphenylborat- und halogenierten Tetraphenylboratanionen, wie etwa Perfluorophenylborat, dar.

Geeignete Salze beeinhalten ebenso Doppelsalze und Komplexsalze bestehend aus einem oder mehreren Übergangsmetallionen und unabhängig voneinander ein oder mehrere Alkalimetall-, Erdalkalimetall-, Ammonium-, organische Ammonium-, Phosphonium- und organische Phosphoniumionen und unabhängig voneinander ein oder mehrere oben genannter Anionen. Geeignete Doppelsalze stellen z. B. Ammoniumhexachloropalladat und Ammoniumtetrachloropalladat dar.

Bevorzugt ist eine Quelle der Übergangsmetalle das Übergangsmetall als Element und/oder eine Übergangsmetallverbindung in dessen null-wertigem Zustand.

Bevorzugt wird das Übergangsmetall metallisch eingesetzt oder als Legierung mit weiteren Metallen verwendet, wobei hier Bor, Zirconium, Tantal, Wolfram, Rhenium, Kobalt, Iridium, Nickel, Palladium, Platin und/oder Gold bevorzugt ist. Dabei ist der Übergangsmetallgehalt in der eingesetzten Legierung bevorzugt 45 - 99,95 Gew.-%.

Bevorzugt wird das Übergangsmetall mikrodispers (Teilchengröße 0,1 mm - 100 µm) eingesetzt.

Bevorzugt wird das Übergangsmetall auf einem Metalloxid wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur, auf einem Metallcarbonat wie etwa Bariumcarbonat, Calciumcarbonat, Strontiumcarbonat, auf einem Metallsulfat wie etwa Bariumsulfat, Calciumsulfat, Strontiumsulfat, auf einem Metallphosphat wie etwa Aluminiumphosphat, Vanadiumphosphat, auf einem Metallcarbid wie etwa Siliconcarbid, auf einem Metallaluminat wie etwa Calciumaluminat, auf einem Metallsilikat wie etwa Aluminiumsilikat, Kreiden, Zeolithe, Bentonit, Montmorillonit, Hectorit, auf funktionalisierten Silikaten, funktionalisierten Silikagelen wie etwa SiliaBond^{®}, QuadraSil™, auf funktionalisierten Polysiloxanen wie etwa Deloxan^{®}, auf einem Metallnitrid, auf Kohle, Aktivkohle, Mullite, Bauxite, Antimonite, Scheelite, Perovskite, Hydrotalcite, Heteropolyanionen, auf funktionalisierter und unfunktionalisierter Cellulose, Chitosan, Keratin, Heteropolyanionen, auf Ionentauschern wie etwa Amberlite™, Amberjet™, Ambersep™, Dowex^{®}, Lewatit^{®}, ScavNet^{®}, auf funktionalisierten Polymeren wie etwa Chelex^{®}, QuadraPure™, Smopex^{®}, PolyOrgs^{®}, auf polymergebundenen Phosphanen, Phosphanoxiden, Phosphinaten, Phosphonaten, Phosphaten, Aminen, Ammoniumsalzen, Amiden, Thioamiden, Harnstoffen, Thioharnstoffen, Triazinen, Imidazolen, Pyrazolen, Pyridinen, Pyrimidinen, Pyrazinen, Thiolen, Thiolether, Thiolester, Alkoholen, Alkoxiden, Ether, Ester, Carbonsäuren, Acetaten, Acetalen, Peptiden, Hetarenen, Polyethylenimin/Siliciumdioxid und/oder Dendrimeren geträgert verwendet.

Geeignete Quellen der Metallsalze und/oder Übergangsmetalle stellen bevorzugt ebenfalls deren Komplexverbindungen dar. Komplexverbindungen der Metallsalze und/oder Übergangsmetalle setzen sich aus den Metallsalzen bzw. Übergangsmetalle und einem oder mehreren Komplexbildnern zusammen. Geeignete Komplexbildner sind z. B. Olefine, Diolefine, Nitrile, Dinitrile, Kohlenmonoxid, Phosphine, Diphosphine, Phosphite, Diphosphite, Dibenzylidenaceton, Cyclopentadienyl, Indenyl oder Styrol. Geeignete Komplexverbindungen der Metallsalze und/oder Übergangsmetalle können auf den oben genannten Trägermaterialien geträgert sein.

Bevorzugt ist der Gehalt an den genannten geträgerten Übergangsmetallen 0,01 bis 20 Gew.-%, vorzugsweise 0,1 bis 10 Gew.-%, insbesondere 0,2 bis 5 Gew.-%, bezogen auf die Gesamtmasse des Trägermaterials.

### Geeignete Quellen von Übergangsmetallen und Übergangsmetallverbindungen sind beispielsweise

Palladium, Platin, Nickel, Rhodium; Palladium Platin, Nickel oder Rhodium,auf Alumina, auf Silika, auf Bariumcarbonat, auf Bariumsulfat, auf Calciumcarbonat, auf Strontiumcarbonat, auf Kohle, auf Aktivkohle; Platin-Palladium-Gold-, Aluminum-Nickel-, Eisen-Nickel-, Lanthanoid-Nickel, Zirconium-Nickel-, Platin-Iridium-, Platin-Rhodium-Legierung; Raney^{®}-Nickel, Nickel-Zink-Eisen-Oxid; Palladium(II)-, Nickel(II)- ,Platin(II)-, Rhodiumchlorid, -bromid, -iodid, -fluorid, -hydrid, -oxid, -peroxid, -cyanid, -sulfat, -nitrat, -phosphid, -borid, -chromoxid, -cobaltoxid, -carbonathydroxid, -cyclohexanbutyrat, -hydroxid, -molybdat, -octanoat, -oxalat, -perchlorat, -phthalocyanin, -5,9,14,18,23,27,32,36-octabutoxy-2,3-naphthalocyanin, -sulfamat, -perchlorat, -thiocyanat, -bis(2,2,6,6-tetramethyl-3,5-heptanedionat), -propionat, -acetat, -stearat, -2-ethylhexanoat, -acetylacetonat, -hexafluoroacetylacetonat, -tetrafluoroborat, -thiosulfat, -trifluoroacetat, -phthalocyanintetrasulfonsäure Tetranatriumsalz, -methyl, -cyclopentadienyl, -methylcyclopentadienyl, -ethylcyclopentadienyl, -pentamethylcyclopentadienyl, -2,3,7,8,12,13,17,18-octaethyl-21H,23H-porphin, -5,10,15,20-tetraphenyl-21 H,23H-porphin, -bis(5-[[4-(dimethylamino)phenyl]imino]-8(5H)-quinolinon), -2,11,20,29-tetra-tert-butyl-2,3-naphthalocyanin, -2,9,16,23-tetraphenoxy-29H,31 H-phthalocyanin, -5,10,15,20-tetrakis(pentafluorophenyl)-21H,23H-porphin und deren 1,4-Bis(diphenylphosphin)butan-, 1,3-Bis(diphenylphosphino)propan-, 2-(2'-Di-tert-butylphosphin)biphenyl-, Acetonitril-, Benzonitril-, Ethylendiamin-, Chloroform-, 1,2-Bis(phenylsulfinyl)ethan-, 1,3-Bis(2,6-disopropylphenyl)-imidazoliden)(3-chloropyridyl)-, 2'-(Dimethylamino)-2-biphenylyl-, Dinorbornylphosphin-, 2-(Dimethylaminomethyl)ferrocen-, Allyl-, Bis(Diphenylphosphino)butan-, (N-succinimidyl)bis-(triphenylphosphin)-, Dimethylphenylphosphin-, Methyldiphenyl-phosphin-, 1,10-Phenanthrolin-, 1,5-Cyclooctadien-, N,N,N',N'-Tetramethyl-ethylendiamin-, Triphenyl-phosphin-, Tri-o-tolylphosphin-, Tricyclohexylphosphin-, Tributylphosphin-, Triethylphosphin-, 2,2'-Bis(diphenylphosphino)-1,1'-binaphthyl-, 1,3-Bis(2,6-diisopropylphenyl)imidazol-2-yliden-, 1,3-Bis(mesityl)imidazol-2-yliden-, 1,1'-Bis(diphenylphosphino)ferrocen-, 1,2-Bis(diphenylphosphino)ethan-, N-Methylimidazol-, 2,2'-Bipyridin-, (Bicyclo[2.2.1]-hepta-2,5-dien)-, Bis(di-tert-butyl(4-dimethylamino-phenyl)phosphin)-, Bis(tert.-butylisocyanid)-, 2-Methoxyethylether-, Ethylenglycol-dimethylether-, 1,2-Dimethoxyethan-, Bis(1,3-diamino-2-propanol)-, Bis(N,N-diethylethylendiamin)-, 1,2-Diaminocyclohexan-, Pyridin-, 2,2':6',2"-terpyridin-, Diethylsulfid-, Ethylen-,Amin-Komplexe; Kalium-, Natrium-, Ammoniumhexa-chloropalladat(IV), Kalium-, Natrium-, Ammonium-tetrachloropalladat(II), Bromo(tri-tert-butylphosphin)palladium(I) Dimer, (2-Methyl-allyl)palladium(II)chlorid Dimer, Bis(dibenzylidenaceton)palladium(0), Tris(dibenzylidenaceton)dipalladium(0), Tetrakis(triphenylphosphin)palladium(0), Tetrakis-(tricyclohexylphosphin)palladium (0), Bis[1,2-bis(diphenylphos-phin)ethan]-palladium(0), Bis(3,5,3',5'-dimethoxydibenzylidenaceton)palladium(0), Bis(tri-tert-butylphosphin)palladium(0), meso-Tetraphenyltetrabenzoporphin Palladium, Tetrakis(methyldiphenylphosphin)palladium(0), Tris(3,3',3"-phophinidyn-tris(benzolsulfonato)palladium(0) Nonanatriumsalz, 1,3-Bis(2,4,6-trimethylphenyl)-imidazol-2-yliden(1,4-naphthoquinon)palladium(0), 1,3-Bis(2,6-diisopropylphenyl)-imidazol-2-yliden(1,4-naphthoquinon)palladium(0), und deren Chloroform-Komplex;
Allylnickel(II)chlorid Dimer, Ammoniumnickel(II)sulfat,
Bis(1,5-cyclooctadien)nickel(0), Bis(triphenylphosphin)dicarbonylnickel(0), Tetrakis(triphenylphosphin)nickel(0), Tetrakis(triphenylphosphit)nickel(0), Kaliumhexafluoronickelat(IV), Kaliumtetracyanonickelat(II), Kaliumnickel(IV)paraperiodat, Dilithiumtetrabromonickelat(II), Kaliumtetracyanonickelat(II);
Platin(IV)chlorid, -oxid, -sulfid, Kalium-, Natrium-, Ammoniumhexachloro-platinat(IV), Kalium-, Ammoniumtetrachloroplatinat(II), Kaliumtetracyanoplatinat(II), Trimethyl(methylcyclopentadienyl)platin(IV), cis-Diammintetrachloroplatin(IV), Kaliumtrichloro(ethylen)platinat(II), Natriumhexahydroxyplatinat(IV), Tetraaminplatin(II)tetrachloroplatinat(II),
Tetrabutylammoniumhexachloroplatinat(IV),
Ethylenbis(triphenylphosphin)platin(0), Platin(0)-1,3-divinyl-1,1,3,3-tetramethyldisiloxan, Platin(0)-2,4,6,8-tetramethyl-2,4,6,8-tetravinylcyclotetrasiloxan, Tetrakis(triphenyl-phosphin)platin(0), Platinoctaethylporphyrin, Chloroplatinsäure, Carboplatin; Chlorobis(ethylen)rhodium Dimer, Hexarhodiumhexadecacarbonyl, Chloro(1,5-cyclooctadien)rhodium Dimer, Chloro(norbomadien)-rhodium Dimer, Chloro(1,5-hexadien)rhodium Dimer.

Bevorzugt handelt es sich bei den Liganden um Phosphine der Formel (VII)

PR⁹₃ (VII)

in der die Reste R⁹ unabhängig voneinander für Wasserstoff, geradkettiges, verzweigtes oder cyclisches C₁-C₂₀-Alkyl, C₁-C₂₀-Alkylaryl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxy-carbonyl, C₁-C₂₀-Alkylthio, C₁-C₂₀-Alkylsulfonyl, C₁-C₂₀-Alkylsulfinyl, Silyl und/oder deren Derivative und/oder durch wenigstens ein R¹⁰ substituiertes Phenyl- oder durch wenigstens ein R¹⁰ substituiertes Naphtyl stehen. R¹⁰ steht unabhängig voneinander für Wasserstoff, Fluor, Chlor, Brom, Iod, NH₂, Nitro, Hydroxy, Cyano, Formyl, geradkettiges, verzweigtes oder cyclisches C₁-C₂₀-Alkyl, C₁-C₂₀-Alkoxy, HN(C₁-C₂₀-Alkyl), N(C₁-C₂₀-Alkyl)₂, -CO₂-(C₁-C₂₀-Alkyl), -CON(C₁-C₂₀)-Alkyl)₂, -OCO(C₁-C₂₀-Alkyl), NHCO(C₁-C₂₀-Alkyl), C₁-C₂₀-Acyl, -SO₃M, -SO₂N(R¹¹)M, -CO₂M, -PO₃M₂, -AsO₃M₂, -SiO₂M, -C(CF₃)₂OM (M = H, Li, Na oder K), wobei R¹¹ Wasserstoff, Fluor, Chlor, Brom, Iod, geradkettiges, verzweigtes oder cyclisches C₁-C₂₀-Alkyl, C₂-C₂₀-Alkenyl, C₂-C₂₀-Alkinyl, C₁-C₂₀-Carboxyat, C₁-C₂₀-Alkoxy, C₁-C₂₀-Alkenyloxy, C₁-C₂₀-Alkinyloxy, C₂-C₂₀-Alkoxycarbonyl, C₁-C₂₀-Alkylthio, C₁-C₂₀-Alkylsulfonyl, C₁-C₂₀-Alkylsulfinyl, Silyl und/oder deren Derivative, Aryl, C₁-C₂₀-Arylalkyl, C₁-C₂₀-Alkylaryl, Phenyl und/oder Biphenyl bedeutet. Vorzugsweise sind alle Gruppen R⁹ identisch.

Geeignete Phosphine (VII) sind beispielsweise Trimethyl-, Triethyl-, Tripropyl-, Triisopropyl-, Tributyl-, Triisobutyl-, Triisopentyl-, Trihexyl-, Tricyclohexyl-, Trioctyl-, Tridecyl-, Triphenyl-, Diphenylmethyl-, Phenyldimethyl-, Tri(o-tolyl)-, Tri(p-tolyl)-, Ethyldiphenyl-, Dicyclohexylphenyl-, 2-Pyridyldiphenyl-, Bis(6-methyl-2pyridyl)-phenyl-, Tri-(p-chlorophenyl)-, Tri-(p-methoxyphenyl)-, Diphenyl(2-sulfonatophenyl)phosphin; Kalium-, Natrium- und Ammoniumsalze von Diphenyl(3-sulfonatophenyl)phosphin, Bis(4,6-dimethyl-3-sulfonatophenyl)(2,4-dimethylphenyl)phosphin, Bis(3-sulfonato-phenyl)phenylphosphinen, Tris(4,6-dimethyl-3-sulfonatophenyl)phosphinen, Tris(2-sulfonatophenyl)phosphinen, Tris(3-sulfonatophenyl)phosphinen; 2-Bis(diphenylphosphinoethyl)trimethyl-ammoniumiodid, 2'-Dicyclohexylphosphino-2,6-dimethoxy-3-sulfonato-1,1'-biphenyl Natriumsalz, Trimethylphosphit und/oder Triphenylphosphit.

Besonders bevorzugt handelt es sich bei den Liganden um bidentate Liganden der allgemeinen Formel

R⁹M"-Z-M" R⁹ (VIII).

In dieser Formel repräsentieren M" unabhängig voneinander N, P, As oder Sb. Bevorzugt sind die beiden M" gleich und besonders bevorzugt steht M" für ein Phosphoratom.

Jede Gruppe R⁹ repräsentiert unabhängig voneinander die unter Formel (VII) beschrieben Reste. Vorzugsweise sind alle Gruppen R⁹ identisch.

Z stellt bevorzugt eine bivalente Überbrückungsgruppe dar, die wenigstens 1 Brückenatom enthält, wobei bevorzugt 2 bis 6 Brückenatome enthalten sind.

Brückenatome können ausgewählt werden aus C-, N-, O-, Si- und S-Atomen. Bevorzugt ist Z eine organische Überbrückungsgruppe, die wenigstens ein Kohlenstoffatom enthält. Bevorzugt ist Z eine organische Überbrückungsgruppe, die 1 bis 6 Brückenatome enthält, wovon wenigstens zwei Kohlenstoffatome sind, die unsubstituiert oder substituiert sein können.

Bevorzugte Gruppen Z sind -CH₂-, -CH₂-CH₂-, -CH₂-CH₂-CH₂-,
-CH₂-CH(CH₃)-CH₂-, -CH₂-C(CH₃)₂-CH₂-, -CH₂-C(C₂H₅)-CH₂-, -CH₂-Si(CH₃)₂-CH₂-, -CH₂-O-CH₂-, -CH₂-CH₂-CH₂-CH₂-, -CH₂-CH(C₂H₅)-CH₂-, -CH₂-CH(n-Pr)-CH und -CH₂-CH(n-Bu)-CH₂-, unsubstituierte oder substituierte 1,2-Phenyl-, 1,2-Cyclohexyl-, 1,1'- oder 1,2-Ferrocenyl-Reste, 2,2'-(1,1'-Biphenyl)-, 4,5-Xanthen- und/oder Oxydi-2,1-phenylen-Reste.

Geeignete bidentate Phosphinliganden (VIII) sind beispielsweise 1,2-Bis(dimethyl-), 1,2-Bis(diethyl-), 1,2-Bis(dipropyl-), 1,2-Bis(diisopropyl-), 1,2-Bis(dibutyl-), 1,2-Bis(di-tert.-butyl-), 1,2-Bis(dicyclohexyl-) und 1,2-Bis(diphenylphosphino)ethan; 1,3-Bis(dicyclohexyl-), 1,3-Bis(diisopropyl-), 1,3-Bis(di-tert.-butyl-) und 1,3-Bis(diphenylphosphino)propan; 1,4-Bis-(diisopropyl-) und 1,4-Bis(diphenylphos-phino)butan; 1,5-Bis(dicyclohexylphosphino)pentan; 1,2-Bis(di-tert.-butyl-), 1,2-Bis(di-phenyl-), 1,2-Bis(di-cyclohexyl-), 1,2-Bis(dicyclo-pentyl-), 1,3-Bis(di-tert.-butyl-), 1,3-Bis(diphenyl-), 1,3 Bis(dicyclohexyl-) und 1,3-Bis(dicyclopentylphosphino)benzol; 9,9-Dimethyl-4,5-bis(diphenylphosphino)xanthen, 9,9-Dimethyl-4,5-bis(diphenyl-phosphino)-2,7-di-tert.-butylxanthen, 9,9-Dimethyl-4,5-bis(di-tert.-butylphosphino)-xanthen, 1,1'-Bis(diphenylphosphino)-ferrocen, 2,2'-Bis(diphenylphosphino)-1,1'-binaphthyl, 2,2'-Bis(di-p-tolylphosphino)-1,1'-binaphthyl, (Oxydi-2,1-phenylen)-bis(diphenylphosphin), 2,5-(Di-isopropylphospholano)benzol, 2,3-O-Isopropropyliden-2,3-dihydroxy-1,4-bis(diphenylphosphino)butan, 2,2'-Bis(di-tert.-butylphosphino)-1,1'-biphenyl, 2,2'-Bis(dicyclohexylphosphino)-1,1'-biphenyl, 2,2'-Bis(diphenylphosphino)-1,1'-biphenyl, 2-(Di-tert.-butylphosphino)-2'-(N,N-dimethylamino)biphenyl, 2-(Dicyclohexylphosphino)-2'-(N,N-dimethylamino)biphenyl, 2-(Diphenylphosphino)-2'-(N,N-dimethylamino)biphenyl, 2-(Diphenylphosphino)ethyl-amin, 2-[2-(Diphenyl-phosphino)ethyl]pyridin; Kalium-, Natrium- und Ammoniumsalze von 1,2-Bis(di-4-sulfonatophenylphosphino)-benzol, (2,2'-Bis [[bis(3-sulfonato-phenyl)phosphino]methyl]-4,4',7,7'-tetrasulfonato-1,1'-binapthyl, (2,2'-Bis[[bis(3-sulfonatophenyl)phosphino]-methyl]-5,5'-tetrasulfonato-1,1'-biphenyl, (2,2'-Bis [[bis(3-sulfonatophenyl)phosphino]-methyl]-1,1'-binapthyl, (2,2'-Bis[[bis(3-sulfonatophenyl)phosphino]-methyl]-1,1'-biphenyl, 9,9-Dimethyl-4,5-bis(diphenylphosphino)-2,7-sulfonatoxanthen, 9,9-Dimethyl-4,5-bis(di-tert.-butylphosphino)-2,7-sulfonatoxanthen, 1,2-Bis(di-4-sulfonatophenylphosphino)-benzol, Meso-tetrakis(4-sulfonatophenyl)porphin, Meso-tetrakis(2,6-dichloro-3-sulfonatophenyl)porphin, Meso-tetrakis(3-sulfonatomesityl)porphin, Tetrakis(4-carboxyphenyl)porphin und 5,11,17,23-Sulfonato-25,26,27,28-tetrahydroxycalix[4]aren.

Zudem können die Liganden der Formel (VII) und (VIII) durch die Reste R⁹ und/oder die Überbrückungsgruppe an ein geeignetes Polymer oder anorganisches Substrat gebunden sein.

Das Katalysatorsystem hat ein Übergangsmetall-Ligand-Molverhältnis von 1:0,01 bis 1:100, bevorzugt von 1:0,05 bis 1:10 und insbesondere von 1:1 bis 1:4.

Bevorzugt erfolgen die Umsetzungen in den Verfahrensstufen a), b), c) und d) wahlweise in einer Atmosphäre, die weitere gasförmige Bestandteile wie zum Beispiel Stickstoff, Sauerstoff, Argon, Kohlendioxid enthält; die Temperatur beträgt -20 bis 340 °C, insbesondere 20 bis 180 °C und der Gesamtdruck von 1 bis 100 bar.

Die Isolierung der Produkte und/oder des Übergangsmetalls und/oder der Übergangs-metallverbindung und/oder Katalysatorsystems und/oder des Liganden und/oder der Edukte nach den Verfahrensstufen a), b), c) und d) erfolgt wahlweise durch Destillation oder Rektifikation, durch Kristallisation oder Fällen, durch Filtration oder Zentrifugieren, durch Adsorption oder Chromatographie oder anderen bekannten Methoden.

Erfindungsgemäß werden Lösungsmittel, Hilfsmittel und ggf. andere flüchtige Bestandteile durch z. B. Destillation, Filtration und/oder Extraktion abgetrennt.

Bevorzugt erfolgt die Umsetzungen in den Verfahrensstufen a), b), c) und d) wahlweise in Absorptionskolonnen, Sprühtürmen, Blasensäulen, Rührkesseln, Reiselbettreaktor, Strömumgsrohren, Schlaufenreaktoren und/oder Knetern.

Geeignete Mischorgane sind z. B. Anker-, Blatt-, MIG-, Propeller-, Impeller-, Turbinen-, Kreuz-Rührer, Dispergierscheiben, Hohl-(Begasungs-)-Rührer, Rotor Stator-Mischer, statische Mischer, Venturi-Düsen und/oder Mammutpumpen.

Die Reaktionslösungen/-mischungen erfahren dabei eine Mischintensität, die einer Rotations-Reynolds-Zahl von 1 bis 1.000.000, bevorzugt von 100 bis 100.000 entspricht.

Bevorzugt erfolgt eine intensive Durchmischung der jeweiligen Reaktionspartner etc. unter einem Energieeintrag von 0,080 bis 10 kW/m³, bevorzugt 0,30 - 1,65 kW/m³.

Bevorzugt wirkt der Katalysator A während der Umsetzung homogen und/oder heterogen. Daher wirkt der jeweils heterogen wirkende Katalysator während der Umsetzung als Suspension oder an eine feste Phase gebunden.

Bevorzugt wird der Katalysator A vor der Umsetzung und/oder zu Beginn der Umsetzung und/oder während der Umsetzung in situ generiert.

Bevorzugt erfolgt die jeweilige Umsetzung in einem Lösungsmittel als Ein-PhasenSystem in homogener oder heterogener Mischung und/oder in der Gasphase.

Wird ein Mehr-Phasen-System verwendet kann zusätzlich ein Phasentransferkatalysor eingesetzt werden.

Die erfindungsgemäßen Reaktionen können in flüssiger Phase, in der Gasphase oder in überkritischer Phase durchgeführt werden. Dabei wird der Katalysator A bei Flüssigkeiten vorzugsweise homogen oder als Suspension eingesetzt, während bei Gasphasen- oder überkritischer Fahrweise eine Festbettanordnung von Vorteil ist.

Geeignete Lösungsmittel sind Wasser, Alkohole wie z. B. Methanol, Ethanol, i-Propanol, n-Propanol, n-Butanol, i-Butanol, t-Butanol, n-Amylalkohol, i-Amylalkohol, t-Amylalkohol, n-Hexanol, n-Octanol, i-Octanol, n-Tridecanol, Benzylalkohol etc. Bevorzugt sind weiterhin Glycole wie z.B. Ethylenglycol, 1,2-Propandiol, 1,3-Propandiol, 1,3-Butandiol, 1,4-Butandiol, Diethylenglycol etc.; aliphatische Kohlenwasserstoffe wie Pentan, Hexan, Heptan, Octan, und Petrolether, Petroleumbenzin, Kerosin, Petroleum, Paraffinöl etc.; aromatische Kohlenwasserstoffe wie Benzol, Toluol, Xylol, Mesitylen, Ethylbenzol, Diethylbenzol etc.; Halogenkohlenwasserstoffe wie Methylenchlorid, Chloroform, 1,2-Dichloroethan, Chlorobenzol, Tetrachlorkohlenstoff, Tetrabromoethylen etc.; alicyclische Kohlenwasserstoffe wie Cyclopentan, Cyclohexan und Methylcyclohexan etc.; Ether wie Anisol (Methylphenylether), t-Butylmethylether, Dibenzylether, Diethylether, Dioxan, Diphenylether, Methylvinylether, Tetrahydrofuran, Triisopropylether etc.; Glycolether wie Diethylenglycoldiethylether, Diethylenglycoldimethylether (Diglyme), Diethylenglycolmonobutylether, Diethylenglycolmonomethylether, 1,2-Dimethoxy-ethan (DME Monoglyme), Ethylenglycolmonobutylether, Triethylenglycoldimethylether (Triglyme), Triethylenglycolmonomethylether etc.; Ketone wie Aceton, Diisobutylketon, Methyl-n-propylketon; Methylethylketon, Methyl-i-butylketon etc; Ester wie Methylformat, Methylacetat, Ethylacetat, n-Propylacetat und n-Butylacetat etc.; Carbonsäuren wie Ameisensäure, Essigsäure, Propionsäure, Buttersäure etc.; einzeln oder in Kombination miteinander.

Geeignete Lösungsmittel sind auch die eingesetzten Olefine und Phosphinsäurequellen. Diese bieten Vorteile in Form einer höheren Raum-Zeit-Ausbeute.

Bevorzugt wird die Umsetzung unter dem eigenen Dampfdruck des Olefins und/oder des Lösungsmittels durchgeführt.

Bevorzugt sind R¹, R², R³, R⁴ des Olefins (IV) gleich oder verschieden und bedeuten, unabhängig voneinander, H, Methyl, Ethyl, n-Propyl, Isopropyl, n-Butyl, Isobutyl, tert.-Butyl und/oder Phenyl.

Bevorzugt werden auch funktionalisierte Olefine wie Allylisothiocyanat, Allylmethacrylat, 2-Allylphenol, N-Allylthioharnstoff, 2-(Allylthio)-2-thiazolin, Allyltrimethylsillan, Allylacetat, Allylacetoacetat, Allylalkohol, Allylamin, Allylbenzol, Allylcyanid, Allyl-(cyanacetat), Allylanisol, trans-2-Pentenal, cis-2-Pentennitril, 1-Penten-3-ol, 4-Penten-1-ol, 4-Penten-2-ol, trans-2-Hexenal, trans-2-Hexen-1-ol, cis-3-Hexen-1-ol, 5-Hexen-1-ol, Styrol, -Methylstyrol, 4-Methylstyrol, Vinylacetat, 9-Vinylanthracen, 2-Vinylpyridin, 4-Vinylpyridin und 1-Vinyl-2-pyrrolidon eingesetzt.

Bevorzugt erfolgt die Umsetzung bei einem Partialdruck des Olefins von 0,01 - 100 bar, besonders bevorzugt bei einem Partialdruck des Olefins von 0,1 - 10 bar.

Bevorzugt erfolgt die Umsetzung in einem Phosphinsäure-Olefin-Molverhältnis von 1:10.000 bis 1:0,001, besonders bevorzugt im Verhältnis von 1:30 bis 1:0,01. Bevorzugt erfolgt die Umsetzung in einem Phosphinsäure-Katalysator-Molverhältnis von 1:1 bis 1:0,00000001, besonders bevorzugt bei 1:0,01 bis 1:0,000001.

Bevorzugt erfolgt die Umsetzung in einem Phosphinsäure-Lösungsmittel-Molverhältnis von 1:10.000 bis 1:0, besonders bevorzugt bei 1:50 bis 1:1.

Ein erfindungsgemäßes Verfahren zur Herstellung von Verbindungen der Formel (II) ist dadurch gekennzeichnet, dass man eine Phosphinsäurequelle mit Olefinen in Gegenwart eines Katalysators umsetzt und das Produkt (II) (Alkylphosphonigsäure bzw. -salze, -ester) von Katalysator, Übergangsmetall bzw. Übergangsmetall-verbindung, Ligand, Komplexbildner, Salzen und Nebenprodukten befreit wird.

Erfindungsgemäß wird der Katalysator, das Katalysatorsystem, das Übergangsmetall und/oder die Übergangsmetallverbindung abgetrennt durch Zugabe eines Hilfsmittels 1 und Entfernen des Katalysators, des Katalysatorsystems, des Übergangsmetalls und/oder der Übergangsmetallverbindung durch Extraktion und/oder Filtration.

Erfindungsgemäß wird der Ligand und/oder Komplexbildner durch Extraktion mit Hilfsmittel 2 und/oder Destillation mit Hilfsmittel 2 abgetrennt.

Hilfsmittel 1 ist bevorzugt Wasser und/oder mindestens ein Vertreter der Familie der Metallfänger (Metal Scavenger). Bevorzugte Metallfänger sind Metalloxide wie etwa Aluminiumoxid, Siliciumdioxid, Titandioxid, Zirkoniumdioxid, Zinkoxid, Nickeloxid, Vanadiumoxid, Chromoxid, Magnesiumoxid, Celite^{®}, Kieselgur; Metallcarbonate wie etwa Bariumcarbonat, Calciumcarbonat, Strontiumcarbonat; Metallsulfate wie etwa Bariumsulfat, Calciumsulfat, Strontiumsulfat; Metallphosphate wie etwa Aluminiumphosphat, VanadiumphosphatM Metallcarbide wie etwa Siliconcarbid; Metallaluminate wie etwa Calciumaluminat; Metallsilikate wie etwa Aluminiumsilikat, Kreiden, Zeolithe, Bentonit, Montmorillonit, Hectorit; funktionalisierte Silikate, funktionalisierte Silikagele wie etwa SiliaBond^{®}, Quadrasil™ ; funktionalisierte Polysiloxane wie etwa Deloxan^{®}; Metallnitride, Kohle, Aktivkohle, Mullite, Bauxite, Antimonite, Scheelite, Perovskite, Hydrotalcite, funktionalisierte und unfunktionalisierte Cellulose, Chitosan, Keratin, Heteropolyanionen, Ionentauscher wie etwa Amberlite™, Amberjet™, Ambersep™, Dowex^{®}, Lewatit^{®}, ScavNet^{®}; funktionalisierte Polymere wie etwa Chelex^{®}, QuadraPure™, Smopex^{®}, PolyOrgs^{®}; polymergebundene Phosphane, Phosphanoxide, Phosphinate, Phosphonate, Phosphate, Amine, Ammoniumsalze, Amide, Thioamide, Harnstoffe, Thioharnstoffe, Triazine, Imidazole, Pyrazole, Pyridine, Pyrimidine, Pyrazine, Thiole, Thiolether, Thiolester, Alkohole, Alkoxide, Ether, Ester, Carbonsäuren, Acetate, Acetale, Peptide, Hetarene, Polyethylenimin/Siliciumdioxid und/oder Dendrimere.

Bevorzugt wird Hilfsmittel 1 in Mengen zugesetzt, die einer 0,1 - 40 gew.-%igen Beladung des Metalls auf dem Hilfsmittel 1 entsprechen.

Bevorzugt wird Hilfsmittel 1 bei Temperaturen von 20 - 90 °C eingesetzt.

Bevorzugt beträgt die Verweilzeit von Hilfsmittel 10,5 - 360 Minuten.

Hilfsmittel 2 ist bevorzugt das vorgenannte, erfindungsgemäße Lösungsmittel, wie sie bevorzugt in der Verfahrensstufe a) eingesetzt werden.

Die Veresterung der mono-carboxyfunktionalisierten Dialkylphosphinsäure (III) bzw. der mono-funktionalisierten Dialkylphosphinsäure (VI) bzw. der Alkylphosphonigsäuredrivate (II) sowie der Phosphinsäurequelle (I) zu den entsprechenden Estern kann beispielsweise durch Umsetzung mit höhersiedenden Alkoholen unter Entfernung des gebildeten Wassers durch Azeotropdestillation oder durch Umsetzung mit Epoxiden (Alkylenoxiden) erreicht werden.

Bevorzugt wird hierbei nach Schritt a) die Alkylphosphonigsäure (II) mit einem Alkohol der allgemeinen Formel M-OH und/oder M'-OH oder durch Umsetzung mit Alkylenoxiden, wie nachfolgend angeführt, direkt verestert.

Bevorzugt sind M-OH primäre, sekundäre oder tertiäre Alkohole mit einer Kohlenstoffkettenlänge von C₁-C₁₈. Besonders bevorzugt sind Methanol, Ethanol, Propanol, Isopropanol, n-Butanol, 2-Butanol, tert.-Butanol, Amylalkohol und/oder Hexanol.

Bevorzugt sind M'-OH Ethylenglykol, 1,2-Propylen-glykol, 1,3-Propylenglykol, 1,4-Butandiol, 2,2-Dimethylpropan-1,3-diol, Neopentyl-glykol, 1,6-Hexandiol, 1,4-Cyclohexan-dimethanol, Glycerin, Trishydroxymethylethan, Trishydroxymethylpropan, Pentaerythrit, Sorbit, Mannit, α-Naphthol, Polyethylenglykole, Polypropylenglykole und/oder EO-PO-Blockpolymere.

Geeignet sind als M-OH und M'-OH auch ein- oder mehrwertige, ungesättigte Alkohole mit einer Kohlenstoffkettenlänge von C₁-C₁₈, etwa n-Buten-2-ol-1, 1,4-Butendiol und Allylalkohol.

Geeignet sind als M-OH und M'-OH auch Umsetzungsprodukte von einwertigen Alkoholen mit einem oder mehreren Molekülen von Alkylenoxiden, bevorzugt mit Ethylenoxid und/oder 1,2-Propylenoxid. Bevorzugt sind 2-Methoxyethanol, 2-Ethoxyethanol, 2-n-Butoxy-ethanol, 2-(2'-Ethyl-hexyloxy)-ethanol, 2-n-Dodecoxyethanol, Methyldiglykol, Ethyldiglykol, Isopropyldiglykol, Fettalkoholpolyglykolether und Arylpolyglykolether.

Bevorzugt sind M-OH und M'-OH auch Umsetzungsprodukte von mehrwertigen Alkoholen mit einem oder mehreren Molekülen Alkylenoxid, insbesondere Diglykol und Triglykol sowie Addukte von 1 bis 6 Molekülen Ethylenoxid oder Propylenoxid an Glycerin, Trishydroxymethylpropan oder Pentaerythrit.

Als M-OH und M'-OH können auch Umsetzungsprodukte von Wasser mit einem oder mehreren Molekülen Alkylenoxid eingesetzt werden. Bevorzugt sind Polyethylenglykole und Poly-1,2-propylenglykole verschiedener Molekulargrößen mit einem mittleren Molgewicht von 100-1000 g/mol, besonders bevorzugt von 150-350 g/mol.

Bevorzugt sind als M-OH und M'-OH auch Umsetzungsprodukte von Ethylenoxid mit Poly-1,2-propylen-glykolen oder Fettalkoholpropylenglykole; ebenso Umsetzungsprodukte von 1,2-Propylenoxid mit Polyethylenglykolen oder Fettalkoholethoxylaten. Bevorzugt sind solche Umsetzungsprodukte mit einem mittleren Molgewicht von 100-1000 g/mol, besonders bevorzugt von 150-450 g/mol.

Einsetzbar sind als M-OH und M'-OH auch Umsetzungsprodukte von Alkylenoxiden mit Ammoniak, primären oder sekundären Aminen, Schwefelwasserstoff, Merkaptanen, Sauerstoffsäuren des Phosphors und C₂-C₆-Dicarbonsäuren. Geeignete Umsetzungsprodukte von Ethylenoxid mit Stickstoffverbindungen sind Triethanolamin, Methyldiethanolamin, n-Butyl-diethanolamin, n-Dodecyl-diethanolamin, Dimethyl-ethanolamin, n-Butyl-methylethanolamin, Di-n-butyl-ethanolamin, n-Dodecylmethyl-ethanolamin, Tetrahydroxyethyl-ethylendiamin oder Pentahydroxyethyl-diethylentriamin.

Bevorzugte Alkylenoxide sind Ethylenoxid, 1,2-Propylenoxid, 1,2-Epoxybutan, 1,2-Epoxyethylbenzol, (2,3-Epoxypropyl)benzol, 2,3-Epoxy-1-propanol und 3,4-Epoxy-1-buten.

Geeignete Lösungsmittel sind die im Verfahrensschritt a) genannten Lösungsmittel und die eingesetzten Alkohole M-OH, M'-OH und die Alkylenoxide. Diese bieten Vorteile in Form einer höheren Raum-Zeit-Ausbeute.

Bevorzugt wird die Umsetzung unter dem eigenen Dampfdruck des eingesetzten Alkohols M-OH, M'-OH und Alkylenoxids und/oder des Lösungsmittels durchgeführt.

Bevorzugt erfolgt die Umsetzung bei einem Partialdruck des eingesetzten Alkohols M-OH, M'-OH und Alkylenoxids von 0,01 - -100 bar, besonders bevorzugt bei einem Partialdruck des Alkohols von 0,1 -10 bar.

Bevorzugt wird die Umsetzung bei einer Temperatur von -20 bis 340 °C durchgeführt, besonders bevorzugt bei einer Temperatur von 20 bis 180 °C.

Bevorzugt erfolgt die Umsetzung bei einem Gesamtdruck von 1 bis 100 bar.

Bevorzugt erfolgt die Umsetzung in einem Molverhältnis der Alkohol- bzw. Alkylenoxidkomponente zu der Phosphinsäurequelle (I) bzw. Alkylphosphonigsäure (II) bzw. mono-funktionalisierten Dialkylphosphinsäure (VI) bzw. mono-carboxyfunktionalisierte Dialkylphosphinsäure (III) von 10.000:1 bis 0,001:1, besonders bevorzugt im Verhältnis von 1000:1 bis 0,01:1.

Bevorzugt erfolgt die Umsetzung in einem Molverhältnis der Phosphinsäurequelle (I) bzw. Alkylphosphonigsäure (II) bzw. mono-funktionalisierten Dialkylphosphinsäure (VI) bzw. mono-carboxyfunktionalisierte Dialkylphosphinsäure (III) zum Lösungsmittel von 1:10.000 bis 1:0, besonders bevorzugt in einem Phosphinsäure-Lösungsmittel-Molverhältnis von 1:50 bis 1:1.

Besonders bevorzugte Katalysatoren B, wie sie in der Verfahrensstufe b) eingesetzt werden, sind Peroxo-Verbindungen wie Peroxomonoschwefelsäure, Kaliummonopersulfat (Kaliumperoxomonosulfat), Caroat^{(™)}, Oxone^{(™)}, Peroxodischwefelsäure, Kaliumpersulfat (Kaliumperoxodisulfat), Natriumpersulfat (Natriumperoxodisulfat), Ammoniumpersulfat (Ammoniumperoxodisulfat).

Besonders bevorzugte Katalysatoren B sind Verbindungen, die im Lösemittelsystem Peroxide bilden können wie Natriumperoxid, -hydrate, Lithiumperoxid, -hydrate, Calciumperoxid, Strontiumperoxid, Bariumperoxid, Magnesiumperoxid, Zinkperoxid, Kaliumhyperoxid, -hydrate, Natriumperoxoborat, -hydrate, Kaliumperoxoboratperoxohydrat, Magnesiumperoxoborat, Calciumperoxoborat, Bariumperoxoborat, Strontiumperoxoborat, Kaliumperoxoborat, Peroxomonophosphorsäure, Peroxodiphosphorsäure, Kaliumperoxodiphosphat, Ammoniumperoxodiphosphat, Kaliumammoniumperoxodiphosphate (Doppelsalz), Natriumcarbonatperoxohydrat, Harnstoffperoxohydrat, Ammoniumoxalatperoxid, Bariumperoxidperoxohydrat, Bariumperoxidperoxohydrat, Calciumhydrogenperoxide, Calciumperoxidperoxohydrat, Ammoniumtriphosphatdiperoxophosphathydrat, Kaliumfluoridperoxohydrat, Kaliumfluoridtriperoxohydrat, Kaliumfluoriddiperoxohydrat, Natriumpyrophosphatdiperoxohydrat, Natriumpyrophosphatdiperoxohydratoctahydrat, Kaliumacetatperoxohydrat, Natriumphosphatperoxohydrat, Natriumsilicatperoxohydrat.

Bevorzugte Katalysatoren B sind Wasserstoffperoxid, Perameisensäure, Peressigsäure, Benzoylperoxid, Di-tert-butylperoxid, Dicumylperoxid, 2,4-Dichlorobenzoylperoxid, Decanoylperoxid, Laurylperoxid, Cumolhydroperoxid, Pinenhydroperoxid, p-Menthan-hydroperoxid, tert-Butylhydroperoxid, Acetylacetonperoxid, Methylethylketonperoxid, Bernsteinsäureperoxid, Dicetylperoxydicarbonat, tert-Butylperoxyacetat, tert-Butylperoxymaleinsäure, tert-Butylperoxybenzoat, Acetylcyclohexylsulfonylperoxid.

Bevorzugte Katalysatoren B sind wasserlösliche Azo-Verbindungen. Besonders bevorzugt sind Azoinitiatoren wie VAZO^{®} 52 2,2'-Azobis(2,4-dimethyl-valeronitril), VAZO^{®} 64 (Azo-bis-(isobutyronitril), AIBN), VAZO^{®} 67 2,2'-Azobis(2-methylbutyronitril), VAZO^{®} 88 1,1'-Azobis(cyclohexane-1-carbonitril), VAZO^{®} 68 der Fa. Dupont-Biesteritz, V-70 2,2'-Azobis(4-methoxy-2,4-dimethyl valeronitril), V-65 2,2'-Azobis(2,4-dimethyl-valeronitril), V-601 Dimethyl 2,2'-azobis(2-methylpropionat), V-59 2,2'-Azobis(2-methylbutyronitril), V-40 1,1'-Azobis(cyclohexane-1-carbonitril), VF-096 2,2'-Azobis[N-(2-propenyl)-2-methylpropionamid], V-30 1-[(cyano-1-methylethyl)azo]formamid, VAm-110 2,2'-Azobis(N-butyl-2-methyl-propionamid), VAm-111 2,2'-Azobis(N-cyclohexyl-2-methylpropionamid), VA-0468 2,2'-Azobis[2-(2-imidazolin-2-yl)propandisulfatedihydrate, VA-057 2,2'-Azobis[N-(2-carboxyethyl)-2-methylpropionamidin]tetrahydrat, VA-061 2,2'-Azobis[2-(2-imidazolin-2-yl)propan], VA-080 2,2'-Azobis{2-methyl-N-[1,1-bis(hydroxymethyl)-2-hydroxyethyl] propionamid, VA-085 2,2'-Azobis{2-methyl-N-[2-(1-hydroxybuthyl)]propionamid}, VA-086 2,2'-Azobis[2-methyl-N-(2-hydroxyethyl)-propionamid] von Wako Chemicals.

Geeignet sind auch Azoinitiatoren wie 2-tert-Butylazo-2-cyanopropan, Dimethylazo-diisobutyrat, Azodiisobutyronitril, 2-tert-Butylazo-1-cyanocyclohexan, 1-tert-Amylazo-1-cyanocyclohexan. Weiterhin sind bevorzugt Alkylperketale wie 2,2-Bis-(tert-butylper-oxy)butan, Ethyl-3,3-bis(tert-butylperoxy)butyrat, 1,1-Di-(tert-butylperoxy)cyclohexan.

Bevorzugte Katalysatoren B sind auch Metalle, Metallhydride und Metallalkoholate wie zum Beispiel Lithium, Lithiumhydrid, Lithiumaluminiumhydrid, Methyllithium, Butyllithium, tert-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat oder Kaliumbutylat.

Bevorzugt wird der Katalysator B in Mengen von 0.05 bis 5 mol-% bezüglich der jeweiligen Acrylnitrile (V) eingesetzt.

Bevorzugt wird der Katalysator B in Mengen von 0,001 bis 10 mol-%, bezogen auf die phosphorhaltige Verbindung, eingesetzt.

Geeignete Lösungsmittel sind die, wie sie weiter vorne in Verfahrensstufe a) eingesetzt werden.

Bevorzugt wird der Iniator B mit einer Geschwindigkeit von 0,01 bis 10 mol-% Katalysator pro Stunde, bezogen auf die phosphorhaltige Verbindung, zudosiert.

Bevorzugt erfolgt die Umsetzung der Alkylphosphonigsäuren (II) mit dem Acrylnitril (V) bei einer Temperatur von 0 bis 250 °C, besonders bevorzugt bei 20 bis 200 °C und insbesondere bei 50 bis 150 °C.

Bevorzugt besteht die Atmosphäre bei der Umsetzung mit dem Acrylnitril (V) zu 50 bis 99,9 Gew.-% aus Bestandteilen des Lösungsmittels und Acrylnitril, bevorzugt 70 - 95 %.

Bevorzugt erfolgt die Umsetzung während des Zusatzes von Acrylnitril (V) bei einem Druck von 1 - 20 bar.

In einer weiteren Ausführungsform des Verfahrens wird das nach Verfahrensstufe a) und/oder b) erhaltene Produktgemisch aufgearbeitet.

In einer weiteren Ausführungsform des Verfahrens wird das nach Verfahrensstufe
a) erhaltene Produktgemisch aufgearbeitet und danach die nach Verfahrensstufe
b) erhaltenen mono-funktionalisierten Dialkylphosphinsäuren und/oder deren Ester und Alkalisalze in Verfahrensstufe c) umgesetzt.

Gegenstand der Erfindung ist zudem ein Verfahren in Schritt b) zur kontinuierlichen Herstellung von mono-funktionalisierten Dialkylphosphinsäureestern (VI) durch Umsetzung von Alkylphosphonigsäureestern (II) mit Acrylnitril (V) in Gegenwart von Metallalkoholaten (Katalysator B), welches dadurch gekennzeichnet ist, dass man
a) in einem zur Kreislaufführung des Reaktionsgemisches ausgebildeten, in sich geschlossenen und mit Kühleinrichtungen sowie Überlauf versehenen Reaktor eine dem Reaktorvolumen entsprechende Volumenmenge des herzustellenden mono-funktionalisierten Dialkylphosphinsäureestern (VI), gegebenenfalls im Gemisch mit dem Metallalkoholat entsprechenden Alkohol als Lösungsmittel, vorlegt und im Kreislauf führt; dass man
b) in den Reaktor kontinuierlich den Alkylphosphonigsäureester (II), den Acrylnitril (V) sowie eine alkoholische Lösung des Metallalkoholats unter Kühlung des im Kreislauf geführten Reaktorinhaltes einleitet und bei einer Temperatur von etwa Null bis 80°C im Verlauf von etwa 5-120 Minuten umsetzt, wobei das Molverhältnis des Alkylphosphonigsäureesters (II) zu dem Acrylnitril (V) etwa 1 zu 0,9 - 2 und die Menge des Metallalkoholats, bezogen auf den Alkylphosphonigsäureester (II), etwa 0,1 bis 5 Mol-% beträgt; und dass man
c) über den Überlauf des Reaktors kontinuierlich ein das Verfahrensprodukt enthaltendes Gemisch abzieht und aus dem Gemisch den mono-funktionalisierten Dialkylphosphinsäureester (VI) durch Destillation abtrennt.

Eine bevorzugte Ausführungsform des erfindungsgemäßen Verfahrens besteht darin, dass man die Umsetzung der Reaktionskomponenten bei einer Temperatur von 20 bis 50°C durchführt. Die Beschickung des Reaktors mit den Reaktionskomponenten und der Katalysatorlösung kann beispielsweise derart erfolgen, dass man
a) den Alkylphosphonigsäureester (II), das Acrylnitril (V) sowie die alkoholische Lösung des Metallalkoholats getrennt in den Reaktor einleitet
b) ein Gemisch des Alkylphosphonigsäureesters (11) mit dem Acrylnitril (V), getrennt von der alkoholischen Lösung des Metallalkoholats, in den Reaktor einleitet oder
c) ein Gemisch des Alkylphosphonigsäureesters (II) mit der alkoholischen Lösung des Metallalkoholats, getrennt von dem Acrylnitril (V), in den Reaktor einleitet.

Weiterhin ist es zweckmäßig, wenn der als Lösungsmittel eingesetzte Alkohol und/oder die alkoholische Komponente des Metallalkoholats der alkoholischen Komponente des Alkylphosphonigsäureesters (II) entspricht.

Im Falle des Einsatzes von Alkylphosphonigsäureester (II) und der alkoholischen Metallalkoholatlösung mit unterschiedlichen alkoholischen Komponenten wird ein Mischprodukt als Verfahrensprodukt erhalten.

Schließlich bestehen bevorzugte Merkmale der Erfindung darin, dass das Molverhältnis von Alkylphosphonigsäureester (II) zu Acrylnitril (V) 1 zu 1 - 1,3, die Menge an Katalysator B bezogen auf den Alkylphosphonigsäureester (II) 1 - 5 mol% und die Menge des als Lösungsmittel eingesetzten Alkohols 0,1 - 1000 Mol pro Mol Alkylphosphonigsäureester beträgt.

Gemäß der erfindungsgemäßen Verfahrensweise wird es ermöglicht, in technischem Maßstab kontinuierlich mono-funktionalisierten Dialkylphosphinsäureester (VI) in einer bisher nicht erreichten Ausbeute von etwa 90 % der Theorie herzustellen.

Die in Schritt c) beschriebene Umsetzung zur mono-carboxyfunktionalisierter Dialkylphosphinsäure, deren Salze und Ester (III) wird durch saure oder alkalische Hydrolyse der mono-funktionalisierten Dialkylphosphinsäure, deren Salze oder Ester (VI) unter Verwendung von Säuren oder Basen in Gegenwart von Wasser unter Abtrennung des entstandenen Ammoniumsalzes bzw. Ammoniaks erreicht.

Wird ein mono-carboxyfunktionalisiertes Dialkylphosphinsäuresalz (III) erhalten, kann dieses mit einer Mineralsäure zur entsprechenden Säure umgesetzt und mit einem Alkohol M-OH oder M'-OH oder einem Alkylenoxid verestert werden.

Wird ein mono-carboxyfunktionalisiertes Dialkylphosphinsäureammoniumsalz (III) erhalten, kann dieses zunächst mit einer Base zu einem mono-carboxyfunktionalisierter Dialkylphosphinsäuresalz (III) umgesetzt werden, welches dann mit einer Mineralsäure zur entsprechenden Säure umgesetzt und mit einem Alkohol M-OH oder M'-OH oder einem Alkylenoxid verestert werden.

Geeignete Mineralsäuren sind beispielsweise Salzsäure, Schwefelsäure, Salpetersäure oder Phosphorsäure oder Mischungen der Säuren.

Geignete Basen sind die als Katalysatoren B genannten Metalle, Metallhydride und Metallalkoholate wie zum Beispiel Lithium, Lithiumhydrid, Lithiumaluminiumhydrid, Methyllithium, Butyllithium, t-Butyllithium, Lithiumdüsopropylamid, Natrium, Natriumhydrid, Natriumborhydrid, Natriummethanolat, Natriumethanolat oder Natriumbutylat, Kaliummethanolat, Kaliumethanolat oder Kaliumbutylat und zudem Natriumhydroxid, Kaliumhydroxid, Lithiumhydroxid, Bariumhydroxid.

Bevorzugt kann die saure oder alkalische Hydrolyse in Gegenwart von Wasser und eines inerten Lösungsmittles erfolgen. Geeignete inerte Lösungsmittel sind die in Verfahrensschritt a) genannten Lösungsmittel, bevorzugt sind niedermolekulare Alkohole mit 1 bis 6 Kohlenstoffatomen. Die Verwendung gesättigter, aliphatischer Alkohle ist besonders bevorzugt. Beispiele geeigneter Alkohle sind Methanol, Ethanol, Propanol, i-Propanol, Butanol, 2-Methyl-1-propanol, n-Pentanol, 2-Pentanol, 3-Pentanol, 2-Methyl-2-butanol, 3-Methyl-2-butanol, 2- Methyl-3-butanol, 3-Methyl-1-butanol oder 2-Methyl-1-butanol.

Bevorzugte Basen (Katalysator C) zur Durchführung der alkalischen Hydrolyse sind die als Katalysatoren B genannten Metalle, Metallhydride und Metallalkoholate wie zum Beispiel Lithium, Lithiumhydrid, Lithiumaluminiumhydrid, Methyllithium, Butyllithium, t-Butyllithium, Lithiumdüsopropylamid, Natrium, Natriumhydrid, Natriumborhydrid, Natriummethanolat, Natriumethanolat oder Natriumbutylat, Kaliummethanolat, Kaliumethanolat oder Kaliumbutylat und zudem Natriumhydroxid, Kaliumhydroxid, Lithiumhydroxid, Bariumhydroxid, Ammoniumhydroxid. Bevorzugt werden Natriumhydroxid, Kaliumhydroxid und Bariumhydroxid eingesetzt.

Bevorzugte Mineralsäuren (Katalysator C) zur Druchführung der sauren Hydrolyse sind beispielsweise Schwefel-, Salpeter-, Salz,- Phosphorsäure oder Mischungen davon. Bevorzugt werden Schwefel- oder Salzsäure eingesetzt.

Bei der Durchführung der Hydrolyse ist die Gegenwart von Wasser wesentlich. Die Wassermenge kann von dem stöchiometrischen Bedarf als Mindestmenge bis zu einem Überschuss reichen.

Vorzugsweise erfolgt die Hydrolyse in einem Phosphor/Wasser-Molverhältnis von 1:1 bis 1:1000, besonders bevorzugt von 1:1 bis 1:10.

Vorzugsweise erfolgt die Hydrolyse in einem Phosphor/Base bzw. Säure-Molverhältnis von 1:1 bis 1:300, besonders bevorzugt von 1,1 bis 1:20.

Die verwendete Alkoholmenge beträgt im Allgemeinen von 0,5 kg bis 1,5 kg pro kg der mono-funktionalisierten Dialkylphosphinsäure, deren Salze oder Ester (VI), bevorzugt von 0,6 kg bis 1,0 kg.

Die Reaktionstemperatur beträgt 50 °C bis 140 °C, bevorzugt von 80 °C bis 130 °C.

Bevorzugt erfolgt die Umsetzung bei einem Gesamtdruck von 1 bis 100 bar, besonders bevorzugt bei einem Gesamtdruck von 1 bis 10 bar.

Die Reaktionszeit beträgt 0,2 bis 20 Stunden, besonders bevorzugt 1 bis 12 Stunden.

In einer besonderen Ausführung wird die mono-funktionalisierten Dialkylphosphinsäure, deren Salze oder Ester (VI) mit einer wässrigen Bariumhydroxidlösung zu dem Bariumsalz der entsprechenden mono-carboxyfunktionalisierten Dialkylphosphinsäure (III) hydrolysiert und im Folgenden mit Ammoniumcarbonat oder bevorzugt mit Ammoniak gefolgt von Kohlendioxid zum Ammoniumsalz der mono-carboxyfunktionalisierten Dialkylphosphinsäure (III) und Bariumcarbonat umgesetzt. Letztere kann thermisch in die freie mono-carboxyfunktionalisierten Dialkylphosphinsäure (III) und Ammoniak umgesetzt werden.

Die mono-carboxyfunktionalisierten Dialkylphosphinsäure oder deren Salz (III) kann im Folgenden zu weiteren Metallsalzen umgesetzt werden.

Bevorzugt handelt es sich bei den eingesetzten Metallverbindungen der Verfahrensstufe d) um Verbindungen der Metalle Mg, Ca, Al, Sb, Sn, Ge, Ti, Fe, Zr, Zn, Ce, Bi, Sr, Mn, Li, Na, K, besonders bevorzugt Mg, Ca, Al, Ti, Zn, Sn, Ce, Fe.

Geeignete Lösungsmittel für Verfahrensstufe d) sind die, wie sie weiter vorne in Verfahrensstufe a) eingesetzt werden.

Bevorzugt erfolgt die Umsetzung der in Verfahrensstufe d) in wässrigem Medium.

Bevorzugt setzt man in Verfahrensstufe d) die nach Verfahrensstufe c) erhaltenen erhaltene mono-carboxyfunktionalisierten Dialkylphosphinsäuren, deren Ester und/oder Alkalisalze (III) mit Metallverbindungen von Mg, Ca, Al, Zn, Ti, Sn, Zr, Ce oder Fe zu den mono-carboxyfunktionalisierten Dialkylphosphinsäuresalzen (III) dieser Metalle um.

Die Umsetzung erfolgt dabei in einem Molverhältnis von monocarboxyfunktionalisierter Dialkylphosphinsäure/-ester/-salz (III) zu Metall von 8 zu 1 bis 1 zu 3 (für vierwertige Metallionen oder Metalle mit stabiler vierwertiger Oxidationsstufe), von 6 zu 1 bis 1 zu 3 (für dreiwertige Metallionen oder Metalle mit stabiler dreiwertiger Oxidationsstufe), von 4 zu 1 bis 1 zu 3 (für zweiwertige Metallionen oder Metalle mit stabiler zweiwertiger Oxidationsstufe) und von 3 zu 1 bis 1 zu 4 (für einwertige Metallionen oder Metalle mit stabiler einwertiger Oxidationsstufe).

Bevorzugt führt man in Verfahrenstufe c) erhaltenes mono-carboxyfunktionalisiertes Dialkylphosphinsäureester/-salz (III) in die entsprechende Dialkylphosphinsäure über und setzt in Verfahrensstufe d) diese mit Metallverbindungen von Mg, Ca, Al, Zn, Ti, Sn, Zr, Ce oder Fe zu den mono-carboxyfunktionalisierten Dialkylphosphinsäuresalzen (III) dieser Metalle um.

Bevorzugt wandelt man in Verfahrenstufe c) erhaltene mono-carboxyfunktionalisierte Dialkylphosphinsäure/-ester (III) in ein Dialkylphosphinsäure-Alkalisalz um und setzt in Verfahrensstufe d) dieses mit Metallverbindungen von Mg, Ca, Al, Zn, Ti, Sn, Zr, Ce oder Fe zu den mono-carboxyfunktionalisierten Dialkylphosphinsäuresalzen (III) dieser Metalle um.

Bevorzugt handelt es sich bei den Metallverbindungen von Mg, Ca, Al, Zn, Ti, Sn, Zr, Ce oder Fe für Verfahrenstufe d) um Metalle, Metalloxide, -hydroxide, -oxidhydroxide, -borate, -carbonate, -hydroxocarbonate, -hydroxocarbonathydrate, gemischte -hydroxocarbonate, - gemischte hydroxocarbonathydrate, -phosphate, -sulfate, -sulfat hydrate, -hydroxosulfathydrate, gemischte -hydroxosulfathydrate, -oxysulfate, -acetate, -nitrate, fluoride, -fluoridhydrate, -chloride, chloridhydrate, -oxychloride, -bromide, -iodide, -iodid hydrate, -carbonsäurederivate und/oder -alkoxide.

Bevorzugt handelt es sich bei den Metallverbindungen um Aluminiumchlorid, Aluminiumhydroxid, Aluminiumnitrat, Aluminiumsulfat, Titanylsulfat, Zinknitrat, Zinkoxid, Zinkhydroxid und/oder Zinksulfat.

Geeignet sind auch metallisches Aluminium, -fluorid, -hydroxychlorid, -bromid, -iodid, -sulfid, -selenid; -phosphid, -hypophosphit,-antimonid, -nitrid; -carbid, -hexafluorosilicat; -hydrid, -calciumhydrid, -borhydrid; -chlorat; Natrium-Aluminiumsulfat, Aluminium-Kaliumsulfat, Aluminiumammoniumsulfat, -nitrat, -metaphosphat, -phosphat, -silicat, -magnesiumsilicat, -carbonat, -hydrotalcit, -natriumcarbonat, -borat; -thiocyanat; -oxid, -oxidhydroxid, ihre entsprechenden Hydrate und/oder Polyaluminiumhydroxyverbindungen, die vorzugsweise einen Aluminiumgehalt von 9 bis 40 Gew.-% besitzen.

Geeignet sind auch Aluminiumsalze von Mono-, Di-, Oligo-, Polycarbonsäuren wie z. B. Aluminiumdiacetat, -acetotartrat, -formiat, -lactat, -oxalat, -tartrat, -oleat, -palmitat, -sterarat, -trifluoromethansulfonat, -benzoat,-salicylat, -8-oxychinolat.

Geeignet sind ebenfalls elementares, metallisches Zink sowie Zinksalze wie z. B. Zinkhalogenide (Zinkfluorid, Zinkchloride, Zinkbromid, Zinkiodid).

Geeignet ist auchZinkborat, -carbonat,-hydroxidcarbonat, -silicat, -hexafluorosilicat, -stannat, -hydroxidstannat, -Magnesium-Aluminium-Hydroxidcarbonat; -nitrat, -nitrit, -phosphat, -pyrophosphat; -sulfat, -phosphid, -selenid, -tellurid und Zinksalze der Oxosäuren der siebten Hauptgruppe (Hypohalogenite, Halogenite, Halogenate, z. B. Zinkiodat, Perhalogenate, z. B. Zinkperchlorat); Zinksalze der Pseudohalogenide (Zinkthiocyanat, -cyanat, -cyanid); Zinkoxide, -peroxide, -hydroxide oder gemischte Zinkoxidhydroxide.

Bevorzugt sind Zinksalze der Oxosäuren der Übergangsmetalle (bspw. Zinkchromat(VI)hydroxyd, -chromit, -molybdat, -permanganat, -molybdat).

Geeignet sind auch Zinksalze von Mono-, Di-, Oligo-, Polycarbonsäuren, wie z. B. Zinkformiat, -acetat, -trifluoracetat, -propionat, -butyrat, -valerat, -caprylat, -oleat, -stearat, -oxalat, -tartrat, -citrat, -benzoat, -salicylat, -lactat, -acrylat, -maleat, -succinat, Salze von Aminosäuren (Glyzin), von sauren Hydroxyfunktionen (Zinkphenolat etc.), Zink-p-phenolsulfonat, -acetylacetonat, -stannat, -dimethyldithiocarbamat, -trifluormethansulfonat.

Bei den Titan-Verbindungen ist metallisches Titan ebenso wie Titan (III) und/oder (IV) -chlorid, -nitrat, -sulfat, -formiat, -acetat, -bromid, -fluorid, -oxychlorid, -oxysulfat, -oxid, -n-propoxid, -n-butoxid, -isopropoxid, -ethoxid, -2-ethylhexyloxid.

Geeignet ist auch metallisches Zinn sowie Zinnsalze (Zinn (11) und /oder (IV) -chlorid); Zinnoxide und Zinn-Alkoxid wie z.B. Zinn-(IV)-tert-butoxid. Geeignet sind auch Cer(III)fluorid, -chlorid, -nitrat.

Bei den Zirkonium-Verbindungen ist metallisches Zirkonium sowie Zirkoniumsalze wie Zirkoniumchlorid, -sulfat, Zirconylacetat, Zirconylchlorid bevorzugt. Weiterhin bevorzugt sind Zirkonoxide sowie Zirkon-(IV)-tert-butoxid.

Bevorzugt erfolgt die Umsetzung in Verfahrensstufe d) bei einem Feststoffgehalt der mono-carboxyfunktionalisierten Dialkylphosphinsäuresalze von 0,1 bis 70 Gew.-%, bevorzugt 5 bis 40 Gew.-%.

Bevorzugt erfolgt die Umsetzung in Verfahrensstufe d) bei einer Temperatur von 20 bis 250 °C, bevorzugt bei einer Temperatur von 80 bis 120 °C.

Bevorzugt erfolgt die Umsetzung in Verfahrensstufe d) bei einem Druck zwischen 0,01 und 1000 bar, bevorzugt 0,1 bis 100 bar.

Bevorzugt erfolgt die Umsetzung in Verfahrensstufe d) während einer Reaktionszeit von 1*10⁻⁷ bis 1*10² h.

Bevorzugt wird das nach der Verfahrensstufe d) durch Filtrieren und/oder Zentrifugieren aus dem Reaktionsgemisch abgetrennte mono-carboxyfunktionalisierte Dialkylphosphinsäuresalz (III) getrocknet.

Bevorzugt wird das nach Verfahrensstufe c) erhaltene Produktgemisch ohne weitere Reinigung mit den Metallverbindungen umgesetzt.

Bevorzugte Lösungsmittel sind die in Verfahrensschritt a) genannten Lösungsmittel.

Bevorzugt ist die Umsetzung in Verfahrensstufe d) und/oder c) im durch Stufe a) und/oder b) gegebenen Lösungsmittelsystem.

Bevorzugt ist die Umsetzung in Verfahrensstufe d) in einem modifizierten gegebenen Lösungsmittelsystem. Hierfür werden acide Komponenten, Lösevermittler, Schauminhibitoren etc. zugegeben.

In einer weiteren Ausführungsform des Verfahrens wird das nach Verfahrensstufe a), b), c) und/oder d) erhaltene Produktgemisch aufgearbeitet.

In einer weiteren Ausführungsform des Verfahrens wird das nach Verfahrensstufe c) erhaltene Produktgemisch aufgearbeitet und danach die nach Verfahrensstufe c) erhaltenen mono-carboxyfunktionalisierten Dialkylphosphinsäuren und/oder deren Salze oder Ester (III) in Verfahrensstufe d) mit den Metallverbindungen umgesetzt.

Bevorzugt wird das Produktgemisch nach Verfahrensstufe c) aufgearbeitet, indem die mono-carboxyfunktionalisierten Dialkylphosphinsäuren und/oder deren Salze oder Ester (III) durch Entfernen des Lösungsmittelsystems isoliert werden, z. B.. durch Eindampfen.

Bevorzugt weist das mono-carboxyfunktionalisierte Dialkylphosphinsäuresalz (III) der Metalle Mg, Ca, Al, Zn, Ti, Sn, Zr, Ce oder Fe wahlweise eine Restfeuchte von 0,01 bis 10 Gew.-%, bevorzugt von 0,1 bis 1 Gew.-%, eine mittlere Teilchengröße von 0,1 bis 2000 µm, bevorzugt von 10 bis 500 µm, eine Schüttdichte von 80 bis 800 g/l, bevorzugt von 200 bis 700 g/l, eine Rieselfähigkeit nach Pfrengle von 0,5 bis 10, bevorzugt von 1 bis 5, auf.

Besonders bevorzugt enthalten die Formkörper, -Filme, -Fäden und -Fasern 5 bis 30 Gew.-% der mono-carboxyfunktionalisierte Dialkylphosphinsäure/-ester/-salze, hergestellt nach einem oder mehreren der Ansprüche 1 bis 12, 5 bis 90 Gew.-% Polymer oder Mischungen derselben, 5 bis 40 Gew.-% Additive und 5 bis 40 Gew.-% Füllstoff, wobei die Summe der Komponenten immer 100 Gew.-% beträgt.

Bevorzugt handelt es sich bei den Additiven um Antioxidantien, Antistatica, Treibmittel, weitere Flammschutzmittel, Hitzestabilisatoren, Schlagzähmodifikatoren, Prozesshilfsmittel, Gleitmittel, Lichtschutzmittel, Antidrippingmittel, Compatibilizer, Verstärkungsstoffe, Füllstoffe, Keimbildungsmittel, Nukleierungsmittel, Additive zur Lasermarkierung, Hydrolysestabilisatoren, Kettenverlängerer, Farbpigmente, Weichmacher und/oder Plastifizierungsmittel.

Bevorzugt ist ein Flammschutzmittel, enthaltend 0,1 bis 90 Gew.-% der mono-carboxyfunktionalisierten Dialkylphosphinsäure, -ester und -salze (III) und 0,1 bis 50 Gew.-% weitere Additive, besonders bevorzugt Diole.

Bevorzugte Additive sind auch Aluminiumtrihydrat, Antimonoxid, bromierte aromatische oder cycloaliphatische Kohlenwasserstoffe, Phenole, Ether, Chlorparaffin, Hexachloro-cyclopentadien-Addukte, Roter Phosphor, Melaminderivate, Melamincyanurate, Ammoniumpolyphosphate und Magnesiumhydroxid. Bevorzugte Additive sind auch weitere Flammschutzmittel, insbesondere Salze von Dialkylphosphinsäuren.

Insbesondere betrifft die Erfindung die Verwendung der erfindungsgemäßen mono-carboxyfunktionalisierten Dialkylphosphinsäure, -ester und -salze (III) als Flammschutzmittel bzw. als Zwischenstufe zur Herstellung von Flammschutzmitteln für thermoplastische Polymere wie Polyester, Polystyrol oder Polyamid und für duroplastische Polymere wie ungesättigte Polyesterharze, Epoxidharze, Polyurethane oder Acrylate.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Synthetische lineare Polyester mit permanentem Flammschutz setzen sich aus Dicarbonsäure-Komponenten, Diol-Komponenten der erfindungsgemäßen mono-carboxyfunktionalisierten Dialkylphosphinsäuren und -ester oder aus der nach dem erfindungsgemäßen Verfahren hergestellten mono-carboxyfunktionalisierten Dialkylphosphinsäuren und -ester als Phosphor-enthaltende Kettenglieder zusammen. Die Phosphor enthaltenden Kettenglieder machen 2 - 20 Gew.-% der Dicarbonsäure-Komponente des Polyesters aus. Bevorzugt beträgt der resultierende Phosphorgehalt im Polyester 0.1-5%, besonders bevorzugt 0,5 - 3 Gew.%.

Die folgenden Schritte können mit oder unter Zugabe der erfindungsgemäß hergestellten Verbindungen ausgeführt werden.

Bevorzugt wird zur Herstellung der Formmasse ausgehend von den freien Dicarbonsäure und Diolen zunächst direkt verestert und dann polykondensiert.

Bevorzugt wird ausgehend von Dicarbonsäureestern, insbesondere Dimethylestern, zunächst umgeestert und dann mittels üblicher Katalysatoren polykondensiert.

Bevorzugt können bei der Polyesterherstellung neben den gängigen Katalysatoren auch übliche Additive (Vernetzungsmittel, Mattierungs- und Stabilisierungsmittel, Nukleierungsmittel, Farb- und Füllstoffe etc.) zugesetzt werden.

Bevorzugt findet die Veresterung und/oder Umesterung bei der Polyesterherstellung bei Temperaturen von 100 - 300 °C statt, besonders bevorzugt bei 150 - 250 °C.

Bevorzugt findet die Polykondensation bei der Polyesterherstellung bei Drücken zwischen 0,1 bis 1,5 mbar und Temperaturen von 150 - 450 °C statt, besonders bevorzugt bei 200 - 300 °C.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 - 18, bevorzugt 0,5 - 15 und bei Folien 0,2 -15, bevorzugt 0,9 -12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder von alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methyl-methacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmeth-acrylaten, Styrol und Acrylnitril auf Acrylat-Butadien-Copolymeren, sowie deren Mischungen, wie sie z. B. als ABS-, MBS-, ASA- oder AES-Polymere bekannt sind.

Bevorzugt handelt es sich bei den Polymeren auch um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10 , Polyamid 11, Polyamid 12, usw. Solche Polyamide sind z. B. unter den Handelsnamen Nylon^{®}, Fa. DuPont, Ultramid^{®}, Fa. BASF, Akulon^{®} K122, Fa. DSM, Zytel^{®} 7301, Fa. DuPont, Durethan^{®} B 29, Fa. Bayer und Grillamid^{®}, Fa. Ems Chemie u.a. bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, Ionomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die mono-carboxyfunktionalisierte Dialkylphosphinsäure/-ester/-salze, hergestellt nach einem oder mehreren der Ansprüche 1 bis 12 werden bevorzugt in Formmassen angewendet, die weiter zur Erzeugung von Polymer-Formkörpern eingesetzt werden.

Besonders bevorzugt enthält die flammgeschützte Formmasse 5 bis 30 Gew.-% mono-carboxyfunktionalisierte Dialkylphosphinsäuren, -salze oder -ester, die nach einem oder mehreren der Ansprüche 1 bis 12 hergestellt wurden, 5 bis 90 Gew.-% Polymer oder Mischungen derselben, 5 bis 40 Gew.% Additive und 5 bis 40 Gew.-% Füllstoff, wobei die Summe der Komponenten immer 100 Gew.-% beträgt.

Die Erfindung betrifft auch Flammschutzmittel, die die mono-carboxyfunktionalisierte Dialkylphosphinsäuren, -salze oder -ester, die nach einem oder mehreren der Ansprüche 1 bis 12 hergestellt wurden enthalten.

Außerdem betrifft die Erfindung Polymer-Formmassen sowie Polymer-Formkörper, -Filme, -Fäden und -Fasern, enthaltend die erfindungsgemäß hergestellten mono-carboxyfunktionalisierten Dialkylphosphinsäuresalze (III) der Metalle Mg, Ca, Al. Zn, Ti, Sn, Zr, Ce oder Fe.

Die Erfindung wird durch die nachstenden Beispiele erläutert.

Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz LSM^{®} 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.
Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0 V-2: Zündung der Watte durch brennendes Abtropfen, übrige Kriterien wie bei V-1 Nicht klassifizierbar (nkl): erfüllt nicht die Brandklasse V-2.

Bei einigen untersuchten Proben wurde außerdem der LOI-Wert gemessen. Der LOI-Wert (Limiting Oxygen Index) wird nach ISO 4589 bestimmt. Nach ISO 4589 entspricht der LOI der geringsten Sauerstoffkonzentration in Volumenprozent, die in einer Mischung von Sauerstoff und Stickstoff gerade noch die Verbrennung des Kunststoffs unterhält. Je höher der LOI-Wert, desto schwerer entflammbar ist das geprüfte Material.

| | | |
|---|---|---|
| LOI | 23 | brennbar |
| LOI | 24-28 | bedingt brennbar |
| LOI | 29-35 | flammwidrig |
| LOI | >36 | besonders flammwidrig |

### Eingesetzte Chemikalien und Abkürzungen

| | |
|---|---|
| VE-Wasser | voll-entsalztes Wasser |
| AIBN | Azo-bis-(isobutyronitril), (Fa. WAKO Chemicals GmbH) |
| WakoV65 | 2,2'-Azobis(2,4-dimethyl-valeronitril), (Fa. WAKO Chemicals GmbH) |

| | |
|---|---|
| Deloxan^{®} THP II Metallfänger (Fa. Evonik Industries AG) | |

### Beispiel 1

Bei Raumtemperatur werden in einem Dreihalskolben mit Rührer und Intensivkühler 188 g Wasser vorgelegt und unter Rühren und Durchleiten von Stickstoff entgast. Dann werden unter Stickstoff 0,2 mg Palladium(II)sulfat und 2,3 mg Tris(3-sulfo-phenyl)phosphin Trinatriumsalz hinzugegeben und gerührt, dann 66 g Phosphinsäure in 66 g Wasser zugegeben. Die Reaktionslösung wird in einen 2 I-Büchi-Reaktor überführt und unter Rühren und unter Druck mit Ethylen beschickt und das Reaktionsgemisch auf 80 °C geheizt. Nach einer Ethylenaufnahme von 28 g wird abgekühlt und freies Ethylen abgelassen. Das Reaktionsgemisch wird am Rotationsverdampfer vom Lösungsmittel befreit. Der Rückstand wird mit 100 g VE-Wasser versetzt und bei Raumtemperatur unter Stickstoffatmosphäre gerührt, dann filtriert und das Filtrat mit Toluol extrahiert, danach wird am Rotationsverdampfer vom Lösungsmittel befreit und das Produkt aufgefangen. Man erhält so 92 g (98 % der Theorie) Ethylphosphonigsäure.

### Beispiel 2

Wie in Beispiel 1 werden 99 g Phosphinsäure, 396 g Butanol, 42 g Ethylen, 6,9 mg Tris(dibenzylidenaceton)dipalladium, 9,5 mg 4,5-Bis(diphenylphosphino)-9,9-dimethylxanthen umgesetzt, dann zur Reinigung über eine mit Deloxan^{®} THP II beschickte Säule gegeben und danach nochmal n-Butanol zugegeben. Bei einer Reaktionstemperatur von 80 - 110 °C wird das gebildete Wasser durch Azeotropdestillation entfernt. Das Produkt wird durch Destillation bei vermindertem Druck gereinigt. Ausbeute: 189 g (84 % der Theorie) Ethylphosphonigsäurebutylester.

### Beispiel 3

Wie in Beispiel 1 werden 198 g Phosphinsäure, 198 g Wasser, 84 g Ethylen, 6,1 mg Palladium(II)sulfat, 25,8 mg 9,9-Dimethyl-4,5-bis(diphenylphosphino)-2,7-sulfonato-xanthen Dinatriumsalz umgesetzt, dann zur Reinigung über eine mit Deloxan^{®} THP II beschickte Säule gegeben und danach n-Butanol zugegeben. Bei einer Reaktionstemperatur von 80 - 110 °C wird das gebildete Wasser durch Azeotropdestillation entfernt. Das Produkt wird durch Destillation bei vermindertem Druck gereinigt. Ausbeute: 374 g (83 % der Theorie)
Ethylphosphonigsäurebutylester.

### Beispiel 4

In einem 500 ml-Fünfhalskolben mit Gaseinleitungsrohr, Thermometer, Intensivrührer und Rückflusskühler mit Gasverbrennung werden 94 g (1 mol) Ethylphosphonigsäure (hergestellt wie in Beispiel 1) vorgelegt. Bei Raumtemperatur wird Ethylenoxid eingeleitet. Unter Kühlung wird eine Reaktionstemperatur von 70 °C eingestellt und noch eine Stunde bei 80 °C nachreagiert. Die Ethylenoxidaufnahme beträgt 65,7 g. Die Säurezahl des Produktes ist kleiner 1 mg KOH/g. Ausbeute: 129 g (94 % der Theorie) (Ethylphosphonigsäure-2-hydroxyethylester) als farbloses, wasserklares Produkt.

### Beispiel 5

564 g (6 mol) Ethylphosphonigsäure (hergestellt wie in Beispiel 1) werden in 860 g Wasser gelöst und in einen 5 1-Fünfhalskolben mit Thermometer, Rückflusskühler, Intensivrührer und Tropftrichter vorgelegt. Nach Aufheizen der Reaktionsmischung auf 100 °C wird bei Normaldruck innerhalb von 1 h 371 g (7 mol) Acrylnitril und 500 g einer 5 %igen Natriumperoxodisulfat-Lösung (1,5 mol-% bzgl. Acrylnitril) zugetropft. Anschließend wird das Wasser im Vakuum abdestilliert. Der Rückstand wird in Tetrahydrofuran aufgenommen und extrahiert. Die unlöslichen Salze werden abfiltriert. Das Lösungsmittel des Filtrats wird im Vakuum abgetrennt und der Rückstand aus Aceton umkristallisiert. Es werden 732 g (83 % der Theorie) Ethyl-(2-cyanoethyl)-phosphinsäure als Öl erhalten.

### Beispiel 6

94 g (1 mol) Ethylphosphonigsäure (hergestellt wie in Beispiel 1) und 67 g (1 mol) Methacrylnitril werden in einen Vierhalsrundkolben mit Rührer, Rückflusskühler, Thermometer und Stickstoffeinlass gefüllt und erwärmt. Innerhalb von 1 h werden bei ca. 100 °C 98,4 g einer 5 %-igen Lösung von AIBN in Ethanol zugetropft. Danach wurde das Lösungmittel im Vakuum abdestilliert. Es werden 137 g Ethyl-(2-cyano-2-methylethyl)-phosphinsäure erhalten.

### Beispiel 7

In einem 1 l-Fünfhalskolben mit Thermometer, Rückflusskühler, Intensivrührer und Tropftrichter wurden 447 g (3 mol) Ethylphosphonigsäurebutylester (hergestellt wie in Beispiel 3) und 159 g (3 mol) Acrylnitril vorgelegt. Unter Rühren werden 15 ml Natriumbutylat (30 %ig in Butanol) in einer solchen Geschwindigkeit dazugetropft, dass sich eine Reaktionstemperatur von max. 120 °C einstellt. Das so erhaltene Rohprodukt wird im Vakuum destilliert. Es wurden 554 g (91 % der Theorie) Ethyl-(2-cyanoethyl)-phosphinsäurebutylester als farblose Flüssigkeit erhalten.

### Beispiel 8

Ein Umlaufreaktor mit einem Inhalt von 1 L wird mit einem Gemisch aus 914 g (4,5 mol) Ethyl-(2-cyanoethyl)-phosphinsäurebutylester (hergestellt wie in Beispiel 7) und 62 g (1,35 mol) Ethanol gefüllt. Nach Inbetriebnahme der Pumpe werden stündlich ein Gemisch von 726 g (6,00 mol) Ethyphosphonigsäureethylester und 318 g (6,00 mol) Acrylnitril sowie eine Lösung von 22,4 g (0,20 mol) Kaliumbutylat in 193 g (2,61 mol) Butanol eindosiert, wobei mit Hilfe des Kühlwasserkreislaufes eine Temperatur von ca. 40 °C eingehalten wurde. Das überlaufende Rohprodukt wird 30 Stunden gesammelt und ergab mit dem aus dem Reaktor abgelassenen Produkt eine Gesamtmenge von 37,1 kg. Nach Abtrennung der Leichtsieder durch Destillation unter Wasserstrahlvakuum und Filtration wurde das Produkt in einem Dünnschichtverdampfer unter Vakuum destilliert und es wurden 29,1 kg (143,5 mol) Ethyl-(2-cyanoethyl)-phosphinsäurebutylester erhalten. Dies entspricht nach Abzug der im Reaktor vorgelegten Menge einer P-Ausbeute von 93,0 % bei einer Leistung von ca. 970 g/l*h. Wie dieses Beispiel zeigt, ist eine kontinuierliche Produktion der mono-cyano-funktionalisierten Dialkylphosphinsäureestern in guten Raum-Zeit-Ausbeuten möglich.

### Beispiel 9

150 g (1 mol) des Ethylphosphonigsäurebutylesters (hergestellt wie in Beispiel 2) und 80 g (1,2 mol) Methacrylnitril in 217 g Toluol werden auf ca. 100 °C erwärmt. Unter Rühren werden 124 g einer 10 %-igen Lösung von WakoV65 in Toluol zudosiert. Das Lösungsmittel wird im Vakuum abdestilliert. Es werden 182 g (84 % der Theorie) Ethyl-(2-cyano-2-methylethyl)-phosphinsäurebutylester erhalten.

### Beispiel 10

441 g (3 mol) der erhaltenen Ethyl-(2-cyanoethyl)-phosphinsäure (hergestellt wie in Beispiel 5) werden bei 85 °C in 400 ml Toluol gelöst und mit 888 g (12 mol) Butanol versetzt. Bei einer Reaktionstemperatur von ca. 100 °C wird das gebildete Wasser durch Azeotropdestillation entfernt. Das Produkt Ethyl-(2-cyanoethyl)-phosphinsäurebutylester wird durch Destillation bei vermindertem Druck gereinigt.

### Beispiel 11

540 g (3,0 mol) Ethyl-(2-cyano-2-methylethyl)-phosphinsäure (hergestellt wie in Beispiel 6) werden bei 80 °C in 400 ml Toluol gelöst und mit 315 g (3,5 mol) 1,4-Butandiol versetzt und in einer Destillationsapparatur mit Wasserabscheider bei ca. 100 °C während 4 h verestert. Nach beendeter Veresterung wird das Toluol im Vakuum abgetrennt. Es werden 643 g (92 % der Theorie) Ethyl-(2-cyano-2-methylethyl)-phosphinsäure-4-hydroxybutylester als farbloses Öl erhalten.

### Beispiel 12

441 g (3,0 mol) Ethyl-(2-cyanoethyl)-phosphinsäure (hergestellt wie in Beispiel 5) werden bei 85 °C in 400 ml Toluol gelöst und mit 248 g (4 mol) Ethylenglykol versetzt und in einer Destillationsapparatur mit Wasserabscheider bei ca. 100 °C während 4 h verestert. Nach beendeter Veresterung wird das Toluol und überschüssiges Ethylglykol im Vakuum abgetrennt. Es werden 510 g (89 % der Theorie) Ethyl-(2-cyanoethyl)-phosphinsäure-2-hydroxyethylester als farbloses Öl erhalten

### Beispiel 13

In einer Rührapparatur werden 147 g (1 mol) Ethyl-(2-cyanoethyl)-phosphinsäure (hergestellt wie in Beispiel 5) in 200 ml (2 mol) konzentierter Salzsäure gelöst. Das Gemisch wurde unter guter Rührung auf ca. 90 °C erwärmt und bei dieser Temperatur etwa 6 Stunden reagieren gelassen. Nach Abkühlen der Reaktionslösung wird von entstandenem Ammoniumhydrochlorid filtriert. Einengen der Reaktionslösung resultiert in weiterem Fällen von Ammoniumhydrochlorid, welches durch Filtrieren der heissen Reaktionslösung abgetrennt wird. Anschließend wird das Wasser im Vakuum vollständig abdestilliert. Der Rückstand wird in Essigsäure aufgenommen und extrahiert. Die unlöslichen Salze werden abfiltriert. Das Lösungsmittel des Filtrats wird im Vakuum abgetrennt und der Rückstand aus Aceton umkristallisiert. Es werden 161 g (97 % der Theorie) 3-(Ethylhydroxyphosphinyl)-propionsäure als Feststoff erhalten.

### Beispiel 14

In einer Rührapparatur werden 217 g (1 mol) Ethyl-(2-methyl-2-cyanoethyl)phosphinsäurebutylester (hergestellt wie in Beispiel 9) in 200 ml (2 mol) konzentierter Salzsäure gelöst. Das Gemisch wurde unter guter Rührung auf ca. 90 °C erwärmt und bei dieser Temperatur etwa 8 Stunden reagieren gelassen. Nach Abkühlen der Reaktionslösung wird von entstandenem Ammoniumhydrochlorid filtriert. Einengen der Reaktionslösung resultiert in weiterem Fällen von Ammoniumhydrochlorid, welches durch Filtrieren der heissen Reaktionslösung abgetrennt wird. Anschließend wird das Wasser im Vakuum vollständig abdestilliert. Der Rückstand wird in Essigsäure aufgenommen und extrahiert. Die unlöslichen Salze werden abfiltriert. Das Lösungsmittel des Filtrats wird im Vakuum abgetrennt und der Rückstand aus Aceton umkristallisiert. Es werden 169 g (94 % der Theorie) 3-(Ethylhydroxyphosphinyl)-2-methylpropionsäure als Feststoff erhalten.

### Beispiel 15 '

In einer Rührapparatur legt man 150 g Butanol, 65 g Wasser, 150 g (3,75 mol) Natriumhydroxid und 183 g (1,25 mol) Ethyl-(2-cyanoethyl)-phosphinsäure (hergestellt wie in Beispiel 5) vor. Das Gemisch wurde unter guter Rührung auf ca. 120 °C erwärmt und bei dieser Temperatur etwa 6 Stunden reagieren gelassen. Anschließend wurden 250 ml Wasser zugegeben und das Butanol destillativ aus dem Reaktionsgemisch entfernt. Nach Zugabe von weiteren 500 ml Wasser wurde das Gemisch durch Zugabe von etwa 184 g (1,88 mol) konzentrierter Schwefelsäure neutralisiert. Anschließend wird das Wasser im Vakuum abdestilliert. Der Rückstand wird in Tetrahydrofuran aufgenommen und extrahiert. Die unlöslichen Salze werden abfiltriert. Das Lösungsmittel des Filtrats wird im Vakuum abgetrennt und der Rückstand aus Aceton umkristallisiert. Es werden 203 g (98 % der Theorie) 3-(Ethylhydroxyphosphinyl)-propionsäure als Feststoff erhalten.

### Beispiel 16

In einer Rührapparatur legt man 150 g Ethanol, 65 g Wasser, 150 g (3,75 mol) Natriumhydroxid und 183 g (1,25 mol) Ethyl-(2-cyanoethyl)-phosphinsäure (hergestellt wie in Beispiel 5) vor. Das Gemisch wurde unter Rückfluss erwärmt und bei dieser Temperatur etwa 10 Stunden reagieren gelassen. Anschließend wurden Wasser und das Butanol destillativ aus dem Reaktionsgemisch entfernt. Nach Zugabe von weiteren 500 ml Wasser wurde das Gemisch durch Zugabe von etwa 61 g (0,63 mol) konzentrierter Schwefelsäure neutralisiert. Anschließend wird das Wasser im Vakuum abdestilliert. Der Rückstand wird in Ethanol aufgenommen und die unlöslichen Salze abfiltriert. Das Lösungsmittel des Filtrats wird im Vakuum abgetrennt. Es werden 234 g (89 % der Theorie) 3-(Ethylhydroxyphosphinyl)-propionsäure Natriumsalz als Feststoff erhalten.

### Beispiel 17

In einer Rührapparatur legt man 150 g Butanol, 65 g Wasser, 150 g (3,75 mol) Natriumhydroxid und 271 g (1,25 mol) Ethyl-(2-cyano-2-methylethyl)-phosphinsäure-butylester (hergestellt wie in Beispiel 9) vor. Das Gemisch wurde unter guter Rührung auf ca. 120 °C erwärmt und bei dieser Temperatur etwa 8 Stunden reagieren gelassen. Anschließend wurden 250 ml Wasser zugegeben und das Butanol destillativ aus dem Reaktionsgemisch entfernt. Nach Zugabe von weiteren 500 ml Wasser wurde das Gemisch durch Zugabe von etwa 184 g (1,88 mol) konzentrierter Schwefelsäure neutralisiert. Anschließend wird das Wasser im Vakuum abdestilliert. Der Rückstand wird in Tetrahydrofuran aufgenommen und extrahiert. Die unlöslichen Salze werden abfiltriert. Das Lösungsmittel des Filtrats wird im Vakuum abgetrennt und der Rückstand aus Aceton umkristallisiert. Es werden 216 g (96 % der Theorie) 3-(Ethylhydroxyphosphinyl)-2-methylpropionsäure als Feststoff erhalten.

### Beispiel 18

498 g (3 mol) 3-(Ethylhydroxyphosphinyl)-propionsäure (hergestellt wie in Beispiel 15) werden in 860 g Wasser gelöst und in einem 5 I-Fünfhalskolben mit Thermometer, Rückflusskühler, Intensivrührer und Tropftrichter vorgelegt und mit ca. 480 g (6 mol) 50 %ige Natriumhydroxid-Lösung neutralisiert. Anschließend wird das Wasser im Vakuum abdestilliert. Es werden 624 g (99 % der Theorie) 3-(Ethylhydroxyphosphinyl)-propionsäure Natriumsalz als Feststoff erhalten.

### Beispiel 19

630 g (3 mol) 3-(Ethylhydroxyphosphinyl)-propionsäure Natriumsalz (hergestellt wie in Beispiel 16) werden in 860 g Wasser gelöst und in einem 5 I-Fünfhalskolben mit Thermometer, Rückflusskühler, Intensivrührer und Tropftrichter vorgelegt und durch Zugabe von etwa 147 g (1,5 mol) konzentrierter Schwefelsäure neutralisiert. Anschließend wird das Wasser im Vakuum abdestilliert. Der Rückstand wird in Ethanol aufgenommen und die unlöslichen Salze abfiltriert. Das Lösungsmittel des Filtrats wird im Vakuum abgetrennt. Es werden 488 g (98 % der Theorie) 3-(Ethylhydroxyphosphinyl)-propionsäure als Feststoff erhalten.

### Beispiel 20

498 g (3 mol) der erhaltenen 3-(Ethylhydroxyphosphinyl)-propionsäure (hergestellt wie in Beispiel 15) werden bei 85 °C in 400 ml Toluol gelöst und mit 888 g (12 mol) Butanol versetzt. Bei einer Reaktionstemperatur von ca. 100 °C wird das gebildete Wasser durch Azeotropdestillation entfernt. Das Produkt 3-(Ethylbutoxyphosphinyl)-propionsäurebutylester wird durch Destillation bei vermindertem Druck gereinigt.

### Beispiel 21

540 g (3,0 mol) 3-(Ethylhydroxyphosphinyl)-2-methylpropionsäure (hergestellt wie in Beispiel 17) werden bei 80 °C in 400 ml Toluol gelöst und mit 594 g (6,6 mol) 1,4-Butandiol versetzt und in einer Destillationsapparatur mit Wasserabscheider bei ca. 100 °C während 4 h verestert. Nach beendeter Veresterung wird das Toluol im Vakuum abgetrennt. Es werden 894 g (92 % der Theorie) 3-(Ethyl-4-hydroxybutoxy-phosphinyl)-2-methylpropionsäure-4-hydroxybutylester als farbloses Öl erhalten.

### Beispiel 22

Zu 276 g (2 mol) 3-(Ethylbutoxyphosphinyl)-propionsäurebutylester (hergestellt wie in Beispiel 20) werden 155 g (2,5 mol) Ethylenglycol und 0,4 g Kaliumtitanyloxalat hinzugegeben und 2 h bei 200 °C gerührt. Durch langsames Evakuieren werden leicht flüchtige Anteile abdestilliert. Es werden 244 g (98 % der Theorie) 3-(Ethyl-2-hydroxyethoxyphosphinyl)-propionsäure-2-hydroxyethylester erhalten.

### Beispiel 23

996 g (6 mol) 3-(Ethylhydroxyphosphinyl)-propionsäure (hergestellt wie in Beispiel 15) werden in 860 g Wasser gelöst und in einem 5 I-Fünfhalskolben mit Thermometer, Rückflusskühler, Intensivrührer und Tropftrichter vorgelegt und mit ca. 960 g (12 mol) 50 %ige Natriumhydroxid-LÖsung neutralisiert. Bei 85 °C wird eine Mischung von 2583 g einer 46 %igen wässrigen Lösung von Al₂(SO₄)₃·14 H₂O zugefügt. Anschließend wird der erhaltene Feststoff abfiltriert, mit heißem Wasser gewaschen und bei 130 °C im Vakuum getrocknet. Ausbeute: 1026 g (94 % der Theorie) 3-(Ethylhydroxy-phosphinyl)-propionsäure Aluminium(III)salz als farbloses Salz.

### Beispiel 24

180 g (1 mol) 3-(Ethylhydroxyphosphinyl)-2-methylpropionsäure (hergestellt wie in Beispiel 17) und 170 g Titantetrabutylat werden in 500 ml Toluol 40 Stunden unter Rückfluss erhitzt. Dabei entstehendes Butanol wird mit Anteilen an Toluol von Zeit zu Zeit abdestilliert. Die entstandene Lösung wird anschließend vom Lösungsmittel befreit. Man erhält 184 g (91 % der Theorie) 3-(Ethylhydroxyphosphinyl)-2-methylpropionsäure Titansalz.

### Beispiel 25

Es werden zu 25,4 g 3-(Ethyl-2-hydroxyethoxyphosphinyl)-propionsäure-2-hydroxyethylester (hergestellt wie in Beispiel 22) 290 g Terephthalsäure, 188 g Ethylenglycol, 0,34 g Zinkacetat gegeben und 2 h auf 200 °C erhitzt. Dann werden 0,29 g Trinatriumphosphatanhydrat und 0,14 g Antimon(III)oxid hinzugegeben, auf 280 °C erhitzt und danach evakuiert.

Aus der erhaltenen Schmelze (357 g, Phosphorgehalt 0,9 %) werden Probekörper der Dicke 1,6 mm für die Messung des Sauerstoffindexes (LOI) nach ISO 4589- 2 als auch für den Brandtest UL 94 (Underwriter Laboratories) gespritzt.

Die so hergestellten Probekörper ergaben einen LOI von 42 % O₂ und erfüllten nach UL 94 die Brandklasse V-0. Entsprechende Probekörper ohne 3-(Ethyl-2-hydroxyethoxyphosphinyl)-propionsäure-2-hydroxyethylester ergaben einen LOI von nur 31 % O₂ und erfüllten nach UL 94 nur die Brandklasse V-2. Der 3-(Ethyl-2-hydroxyethoxyphosphinyl)-propionsäure-2-hydroxyethylester enthaltende Polyester-Formkörper zeigt damit eindeutig flammschützende Eigenschaften.

### Beispiel 26

Zu 15,2 g 3-(Ethylhydroxyphosphinyl)-2-methylpropionsäure (hergestellt wie in Beispiel 17) werden 12.9 g 1,3-Propylenglycol zugegeben und bei 160 °C das bei der Veresterung gebildete Wasser abgezogen. Dann werden 378 g Dimethylterephthalat, 152 g 1,3-Propandiol, 0,22 g Tetrabutylitanat und 0,05 g Lithiumacetat zugegeben und die Mischung zunächst 2 h unter Rühren auf 130 bis 180 °C erhitzt, danach bei Unter-druck auf 270 °C. Das Polymer (438 g) enthält 0,6 % Phosphor, der LOI beträgt 34.

### Beispiel 27

Zu 14 g 3-(Ethylhydroxyphosphinyl)-propionsäure (hergestellt wie in Beispiel 13) werden 367 g Dimethylterephthalat, 170 g 1,4-Butandiol, 0,22 g Tetrabutylitanat und 0,05 g Lithiumacetat zugegeben und die Mischung zunächst 2 h lang unter Rühren auf 130 bis 180 °C erhitzt, danach bei Unterdruck auf 270 °C. Das Polymer (427 g) enthält 0,6 % Phosphor, der LOI beträgt 34, der von unbehandeltem Polybutylenterephthalat 23.

### Beispiel 28

In einem 250 ml Fünfhalskolben mit Rückflusskühler, Rührer, Thermometer und Stickstoffeinleitung werden 100 g eines Bisphenol-A-bisglycidethers mit einem Epoxidwert von 0,55 mol/100 g (Beckopox EP 140, Fa. Solutia) und 24,1 g (0,13 mol) 3-(Ethylhydroxyphosphinyl)-2-methylpropionsäure (hergestellt wie in Beispiel 17) unter Rühren auf maximal 150 °C erhitzt. Nach 30 min ergibt sich eine klare Schmelze. Nach einer weiteren Stunde Rühren bei 150 °C wird die Schmelze abgekühlt und gemörsert. Man erhält 118,5 g eines weißen Pulvers mit einem Phosphorgehalt von 3,3 Gew.-%.

### Beispiel 29

In einem 2 I-Kolben mit Rührer, Wasserabscheider, Thermometer, Rückflusskühler und Stickstoffeinleitung werden 29,4 g Phthalsäureanhydrid, 19,6 g Maleinsäureanhydrid, 24,8 g Propylenglycol, 18,7 g 3-(Ethyl-2-hydroxyethoxyphosphinyl)-propionsäure-2-hydroxyethylester (hergestellt wie in Beispiel 22) 20 g Xylol und 50 mg Hydrochinon unter Rühren und Durchleiten von Stickstoff auf 100 °C erhitzt. Bei Einsetzen der exothermen Reaktionwird die Heizung entfernt. Nach Abklingen der Reaktion wird weiter bei ca. 190 °C gerührt. Nachdem 14 g Wasser abgeschieden sind, wird das Xylol abdestilliert und die Polymerschmelze abgekühlt. Man erhält 91,5 g eines weißen Pulvers mit einem Phosphorgehalt von 2,3 Gew.-%.

### Beispiel 30

Eine Mischung von 50 Gew.-% Polybutylenterephthalat, 20 Gew.-% 3-(Ethylhydroxyphosphinyl)-propionsäure Aluminium(III)salz (hergestellt wie in Beispiel 23) und 30 Gew.% Glasfasern werden auf einem Doppelschnecken-Extruder (Typ Leistritz LSM 30/34) bei Temperaturen von 230 bis 260 °C zu einer Polymerformmasse compoundiert. Der homogenisierte Polymerstrang wurde abgezogen, im Wasserbad gekühlt und anschließend granuliert.
Nach Trocknung werden die Formmassen auf einer Spritzgießmaschine (Typ Aarburg Allrounder) bei 240 bis 270 °C zu Polymerformkörper verarbeitet und eine UL-94 Klassifizierung von V-0 bestimmt.

### Beispiel 31

Eine Mischung von 53 Gew.-% Polyamid 6.6, 30 Gew.-% Glasfasern, 17 Gew.-% 3-3-(Ethylhydroxyphosphinyl)-2-methylpropionsäure Titansalz (hergestellt wie in Beispiel 24) werden auf einem Doppelschnecken-Extruder (Typ Leistritz LSM 30/34) zu Polymerformmassen compoundiert. Der homogenisierte Polymerstrang wurde abgezogen, im Wasserbad gekühlt und anschließend granuliert.
Nach Trocknung werden die Formmassen auf einer Spritzgießmaschine (Typ Aarburg Allrounder) bei 260 bis 290 °C zu Polymerformkörpem verarbeitet und eine UL-94 Klassifizierung von V-0 erhalten.

## Patentansprüche

1. Verfahren zur Herstellung von mono-carboxyfunktionalisierten Dialkylphosphinsäuren, -estern und -salzen, **dadurch gekennzeichnet, dass** man
a) eine Phosphinsäurequelle (I) 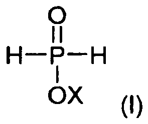 mit Olefinen (IV) 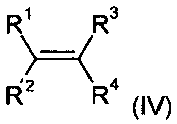 in Gegenwart eines Katalysators A zu einer Alkylphosphonigsäure, deren Salz oder Ester (II) 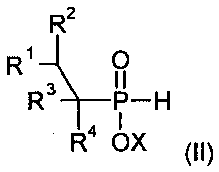 umsetzt,
b) die so entstandene Alkylphosphonigsäure, deren Salz oder Ester (II) mit einem Acrylnitril (V) 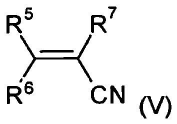 in Gegenwart eines Katalysators B zum mono-funktionalisierten Dialkylphosphinsäurederivat (VI) umsetzt 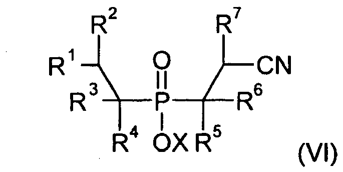 und
c) das mono-funktionalisierten Dialkylphosphinsäurederivat (VI) in Gegenwart eines Katalysators C zum mono-carboxyfunktionalisierten Dialkylphosphinsäurederivat (III) 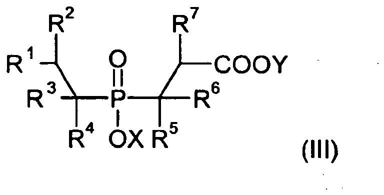 umsetzt oder die nach Schritt a) erhaltene Alkylphosphonigsäure, deren Salz oder Ester (II) und/oder die nach Schritt b) erhaltene mono-funktionalisierte Dialkylphosphinsäure, deren Salz oder Ester (VI) und/oder die nach Schritt c) erhaltene mono-carboxyfunktionalisierte Dialkylphosphinsäure, deren Salz oder Ester (III) und/oder die jeweils resultierende Reaktionslösung davon mit einem Alkylenoxid oder einem Alkohol M-OH und/oder M'-OH verestert, und der jeweils entstandene Alkylphosphonigsäureester (II), mono-funktionalisierten Dialkylphosphinsäurester (VI) und/oder mono-carboxyfunktionalisierten Dialkylphosphinsäurester (III) dem weiteren Reaktionsschritt b) unterwirft, wobei R¹, R², R³, R⁴, R⁵, R⁶, R⁷ gleich oder verschieden sind und unabhängig voneinander H, Methyl, Ethyl, n-Propyl, Isopropyl, n-Butyl, Isobutyl und/oder tert.-Butyl bedeuten, und X und Y gleich oder verschieden sind und unabhängig voneinander für H, C₁-C₁₈-Alkyl, C₆-C₁₈-Aryl, C₆-C₁₈-Aralkyl, C₆-C₁₈-Alkyl-Aryl und/oder für Mg, Ca, Al, Sb, Sn, Ge, Ti, Fe, Zr, Zn, Ce, Bi, Sr, Mn, Cu, Ni, Li, Na, K, H und/oder eine protonierte Stickstoffbase stehen und es sich bei den Katalysatoren A um Übergangsmetalle und/oder Übergangsmetallverbindungen und/oder Katalysatorsysteme handelt, die sich aus einem Übergangsmetall und/oder einer Übergangsmetallverbindung und mindestens einem Liganden zusammensetzen und es sich bei dem Katalysator B um Peroxide bildende Verbindungen und/oder Peroxoverbindungen und/oder um Azo-Verbindungen und/oder um Alkali- und/oder Erdalkalimetalle, -hydride und/oder -alkoholate und es sich bei dem Katalysator C um eine Säure oder eine Base handelt.

2. Verfahren nach Anspruch 1, **dadurch gekennzeichnet, dass** man die nach Schritt c) erhaltene mono-carboxyfunktionalisierten Dialkylphosphinsäure, deren Salz oder Ester III anschließend in einem Schritt d) mit Metallverbindungen von Mg, Ca, Al, Sb, Sn, Ge, Ti, Fe, Zr, Zn, Ce, Bi, Sr, Mn, Li, Na, K und/oder einer protonierte Stickstoffbase zu den entsprechenden mono-carboxyfunktionalisierten Dialkylphosphinsäuresalzen III dieser Metalle und/oder einer Stickstoffverbindung umsetzt.

3. Verfahren nach Anspruch 1 oder 2, **dadurch gekennzeichnet, dass** X und Y gleich oder verschieden sind und jeweils H, Ca, Mg, Al, Zn, Ti, Fe, Ce, Methyl, Ethyl, n-Propyl, Isopropyl, n-Butyl, Isobutyl, tert. Butyl, Phenyl, Ethylenglykol, Propylglykol, Butylglykol, Pentylglykol, Hexylglykol, Allyl und/oder Glycerin bedeuten.

4. Verfahren nach einem oder mehreren der Ansprüche 1 bis 3, **dadurch gekennzeichnet, dass** es sich bei den Übergangsmetallen und/oder Übergangsmetallverbindungen um solche aus der siebten und achten Nebengruppe handelt.

5. Verfahren nach einem oder mehreren der Ansprüche 1 bis 4, **dadurch gekennzeichnet, dass** es sich bei den Übergangsmetallen und/oder Übergangsmetallverbindungen um Rhodium, Nickel, Palladium, Platin und/oder Ruthenium handelt.

6. Verfahren nach einem oder mehreren der Ansprüche 1 bis 5, **dadurch gekennzeichnet, dass** es sich bei dem Katalysator B um Wasserstoffperoxid, Natriumperoxid, Lithiumperoxid, Kaliumpersulfat, Natriumpersulfat, Ammoniumpersulfat, Natriumperoxodisulfat, Kaliumperoxoborat, Peressigsäure, Benzoylperoxid, Di-t-butylperoxid und/oder Peroxodischwefelsäure und/oder um Azodiisobutyronitril, 2,2'-Azobis(2-amidinopropan)-dihydrochlorid und/oder 2,2'-Azobis(N,N'-dimethylen-isobutyramidin)-dihydrochlorid und/oder um Lithium, Lithiumhydrid, Lithiumaluminium-hydrid, Methyllithium, Butyllithium, t-Butyllithium, Lithiumdiisopropylamid, Natrium, Natriumhydrid, Natriumborhydrid, Natriummethanolat, Natriumethanolat oder Natriumbutylat, Kaliummethanolat, Kaliumethanolat und/oder Kaliumbutylat handelt.

7. Verfahren nach einem oder mehreren der Ansprüche 1 bis 6, **dadurch gekennzeichnet, dass** es sich bei dem Katalysator C um Metalle, Metallhydride, Metallhydroxide und Metallalkoholate und Mineralsäuren handelt.

8. Verfahren nach einem oder mehreren der Ansprüche 1 bis 7, **dadurch gekennzeichnet, dass** es sich bei dem Acrylnitril (V) um Acrylnitril, Methacrylnitril, Ethyl-2-cyanoacrylat, 3-Phenylacrylnitril, 2-Methyl-2-butennitril handelt.

9. Verfahren nach einem oder mehreren der Ansprüche 1 bis 8, **dadurch gekennzeichnet, dass** es bei dem Alkohol der allgemeinen Formel M-OH um lineare oder verzweigte, gesättigte und ungesättigte, einwertige organische Alkohole mit einer Kohlenstoffkettenlänge von C₁-C₁₈ und es bei dem Alkohol der allgemeinen Formel M'-OH um lineare oder verzweigte, gesättigte und ungesättigte, mehrwertige organische Alkohole mit einer Kohlenstoffkettenlänge von C₁-C₁₈ handelt.

10. Herstellung von mono-carboxyfunktionalisierten Dialkylphosphinsäuren, -estern und -salzen nach einem oder mehreren der Ansprüche 1 bis 9 und anschließende Verwendung dieser Produkte als Binder, als Vernetzer bzw. Beschleuniger beim Aushärten von Epoxyharzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

## Claims

1. A method for producing monocarboxy-functionalized dialkylphosphinic acids, esters and salts, which comprises
a) reacting a phosphinic acid source (I) 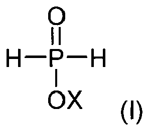 with olefins (IV) 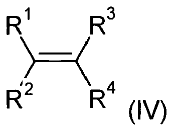 in the presence of a catalyst A to form an alkylphosphonous acid, salt or ester (II) 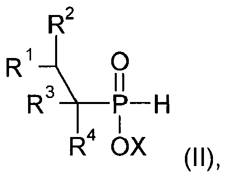
b) reacting the resulting alkylphosphonous acid, salt or ester (II) with an acrylonitrile (V) 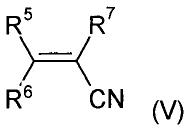 in the presence of a catalyst B to form the monofunctionalized dialkylphosphinic acid derivative (VI) 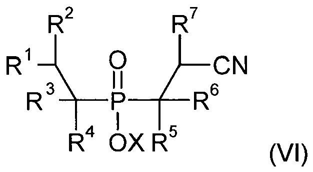 and
c) reacting the monofunctionalized dialkylphosphinic acid derivative (VI) in the presence of a catalyst C to form the monocarboxy-functionalized dialkylphosphinic acid derivative (III) 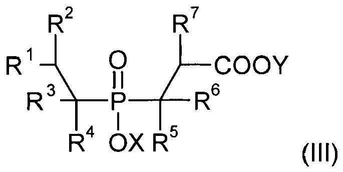 or esterifying the alkylphosphonous acid, salt or ester (II) obtained after step a) and/or the monofunctionalized dialkylphosphinic acid, salt or ester (VI) obtained after step b) and/or the monocarboxy-functionalized dialkylphosphinic acid, salt or ester (III) obtained after step c) and/or the particular resulting reaction solution thereof with an alkylene oxide or an alcohol M-OH and/or M'-OH, and subjecting the respectively resulting alkylphosphonous ester (II), monofunctionalized dialkylphosphinic ester (VI) and/or monocarboxy-functionalized dialkylphosphinic ester (III) to the further reaction step b), where R¹, R², R³, R⁴, R⁵, R⁶, R⁷ are identical or different and are each independently H, methyl, ethyl, n-propyl, isopropyl, n-butyl, isobutyl and/or tert-butyl, and X and Y are identical or different and are each independently H, C₁-C₁₈-alkyl, C₆-C₁₈-aryl, C₆-C₁₈-aralkyl, C₆-C₁₈-alkylaryl and/or Mg, Ca, Al, Sb, Sn, Ge, Ti, Fe, Zr, Zn, Ce, Bi, Sr, Mn, Cu, Ni, Li, Na, K, H and/or a protonated nitrogen base and the catalysts A comprise transition metals and/or transition metal compounds and/or catalyst systems composed of a transition metal and/or transition metal compound and at least one ligand, and the catalyst B comprises peroxide-forming compounds and/or peroxo compounds and/or comprises azo compounds and/or comprises alkali hydrides and/or alkaline earth metal hydrides and/or alkali alkoxides and/or alkaline earth metal alkoxides and the catalyst C comprises an acid or a base.

2. The method according to claim 1 wherein the monocarboxy-functionalized dialkylphosphinic acid, its salt or ester III obtained after step c) is subsequently reacted in a step d) with metal compounds of Mg, Ca, Al, Sb, Sn, Ge, Ti, Fe, Zr, Zn, Ce, Bi, Sr, Mn, Li, Na, K and/or a protonated nitrogen base to form the corresponding monocarboxy-functionalized dialkylphosphinic acid salts III of these metals and/or of a nitrogen compound.

3. The method according to claim 1 or 2 wherein X and Y are identical or different and are each H, Ca, Mg, Al, Zn, Ti, Fe, Ce, methyl, ethyl, n-propyl, isopropyl, n-butyl, isobutyl, tert-butyl, phenyl, ethylene glycol, propyl glycol, butyl glycol, pentyl glycol, hexyl glycol, allyl and/or glycerol.

4. The method according to one or more of claims 1 to 3 wherein the transition metals and/or transition metal compounds comprise such from the seventh and eighth transition groups.

5. The method according to one or more of claims 1 to 4 wherein the transition metals and/or transition metal compounds comprise rhodium, nickel, palladium, platinium and/or ruthenium.

6. The method according to one or more of claims 1 to 5 wherein the catalyst B comprises hydrogen peroxide, sodium peroxide, lithium peroxide, potassium persulfate, sodium persulfate, ammonium persulfate, sodium peroxodisulfate, potassium peroxoborate, peracetic acid, benzoyl peroxide, di-t-butyl peroxide and/or peroxodisulfuric acid and/or comprises azobisisobutyronitrile, 2,2'-azo-bis(2-amidinepropane) dihydrochloride and/or 2,2'-azobis(N,N'-dimethylene-isobutyramidine) dihydrochloride and/or comprises lithium, lithium hydride, lithium aluminohydride, methyllithium, butyllithium, t-butyllithium, lithium diisopropylamide, sodium, sodium hydride, sodium borohydride, sodium methoxide, sodium ethoxide, sodium butoxide, potassium methoxide, potassium ethoxide and/or potassium butoxide.

7. The method according to one or more of claims 1 to 6 wherein the catalyst C comprises metals, metal hydrides, metal hydroxides and metal alkoxides and mineral acids.

8. The method according to one or more of claims 1 to 7 wherein the acrylonitrile (V) comprises acrylonitrile, methacrylonitrile, ethyl 2-cyanoacrylate, 3-phenylacrylonitrile, 2-methyl-2-butenenitrile.

9. The method according to one or more of claims 1 to 8 wherein the alcohol of the general formula M-OH comprises linear or branched, saturated and unsaturated, monohydric organic alcohols having a carbon chain length Of C₁-C₁₈ and the alcohol of the general formula M'-OH comprises linear or branched, saturated and unsaturated polyhydric organic alcohols having a carbon chain length Of C₁-C₁₈.

10. The preparation of monocarboxy-functionalized dialkylphosphinic acids, esters and salts according to one or more of claims 1 to 9 and subsequent use of these products as a binder, as a crosslinker or accelerant to cure epoxy resins, polyurethanes and unsaturated polyester resins, as polymer stabilizers, as crop protection agents, as a sequestrant, as a mineral oil additive, as a corrosion control agent, in washing and cleaning applications and in electronic applications.

## Revendications

1. Procédé pour la préparation d'acides, d'esters et de sels d'acides dialkylphosphoniques monofonctionnalisés par carboxy, **caractérisé en ce que**
a) on transforme une source d'acide phosphinique (I) 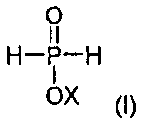 avec des oléfines (IV) 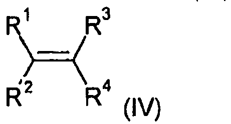 en présence d'un catalyseur A en acide alkylphosphoneux, son sel ou son ester (II) 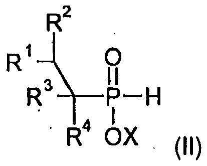
b) on transforme l'acide alkylphosphoneux ainsi formé, son sel ou son ester (II) avec un acrylonitrile (V) 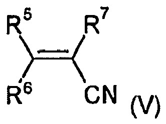 en présence d'un catalyseur B en dérivé d'acide dialkylphosphinique (VI) monofonctionnalisé 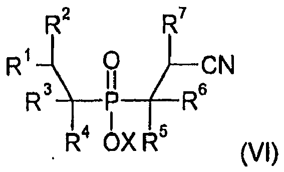 et
c) on transforme le dérivé d'acide dialkylphosphinique monofonctionnalisé (VI) en présence d'un catalyseur C en un dérivé d'acide dialkylphosphinique monofonctionnalisé par carboxy (III) 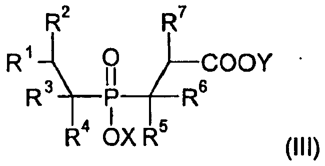 ou on estérifie l'acide alkylphosphoneux obtenu après l'étape a), son sel ou son ester (II) et/ou l'acide dialkylphosphinique monofonctionnalisé obtenu après l'étape b), son sel ou son ester (VI) et/ou l'acide dialkylphosphinique monofonctionnalisé par carboxy obtenu après l'étape c), son sel ou son ester (III) et/ou à chaque fois la solution réactionnelle résultante de ceux-ci avec un oxyde d'alkylène ou un alcool M-OH et/ou M'-OH, et on soumet l'ester de l'acide alkylphosphoneux (II), l'ester de l'acide dialkylphosphinique monofonctionnalisé (VI) et/ou l'acide dialkylphosphinique (III) monofonctionnalisé par carboxy à chaque fois obtenu à l'autre étape de réaction b), R¹, R², R³, R⁴, R⁵, R⁶, R⁷ étant identiques ou différents et signifiant, indépendamment l'un de l'autre, H, méthyle, éthyle, n-propyle, isopropyle, n-butyle, isobutyle et/ou tert-butyle, et X et Y étant identiques ou différents et représentant, indépendamment l'un de l'autre, H, C₁-C₁₈-alkyle, C₆-C₁₈-aryle, C₆-C₁₈-aralkyle, C₆-C₁₈-alkyl-aryle et/ou Mg, Ca, Al, Sb, Sn, Ge, Ti, Fe, Zr, Zn, Ce, Bi, Sr, Mn, Cu, Ni, Li, Na, K, H et/ou une base azotée protonée et où il s'agit pour les catalyseurs A, de métaux de transition et/ou de composés de métaux de transition et/ou de systèmes catalytiques, qui sont composés d'un métal de transition et/ou d'un composé de métal de transition et d'au moins un ligand et où il s'agit pour le catalyseur B de composés formant des peroxydes et/ou de composés peroxo et/ou de composés azo et/ou de métaux, d'hydrures et/ou d'alcoolates de métal alcalin et/ou alcalino-terreux et pour le catalyseur C d'un acide ou d'une base.

2. Procédé selon la revendication 1, **caractérisé en ce qu'**on transforme ensuite l'acide dialkylphosphonique monofonctionnalisé par carboxy obtenu après l'étape c), son sel ou son ester III dans une étape d) avec des composés métalliques de Mg, Ca, Al, Sb, Sn, Ge, Ti, Fe, Zr, Zn, Ce, Bi, Sr, Mn, Li, Na, K et/ou une base azotée protonée en sels d'acide dialkylphosphonique monofonctionnalisé par carboxy correspondants (III) de ces métaux et/ou d'un composé azoté.

3. Procédé selon la revendication 1 ou 2, **caractérisé en ce que** X et Y sont identiques ou différents et représentent à chaque fois H, Ca, Mg, Al, Zn, Ti, Fe, Ce, méthyle, éthyle, n-propyle, iso-propyle, n-butyle, isobutyle, tert-butyle, phényle, éthylèneglycol, propylglycol, butylglycol, pentylglycol, hexylglycol, allyle et/ou glycérol.

4. Procédé selon l'une ou plusieurs des revendications 1 à 3, **caractérisé en ce qu'**il s'agit, pour les métaux de transition et/ou les composés de métaux de transition de ceux du septième et huitième groupe secondaire.

5. Procédé selon l'une ou plusieurs des revendications 1 à 4, **caractérisé en ce qu'**il s'agit, pour les métaux de transition et/ou les composés de métaux de transition, de rhodium, de nickel, de palladium, de platine et/ou de ruthénium.

6. Procédé selon l'une ou plusieurs des revendications 1 à 5, **caractérisé en ce qu'**il s'agit, pour le catalyseur B, de peroxyde d'hydrogène, de peroxyde de sodium, de peroxyde de lithium, de persulfate de potassium, de persulfate de sodium, de persulfate d'ammonium, de peroxodisulfate de sodium, de peroxoborate de potassium, d'acide peracétique, de peroxyde de benzoyle, de peroxyde de di-t-butyle et/ou d'acide peroxodisulfurique et/ou d'azodiisobutyronitrile, de dichlorhydrate de 2,2'-azobis(2-amidinopropane) et/ou de dichlorhydrate de 2,2'-azobis(N,N'-diméthylène-isobutyramidine) et/ou de lithium, d'hydrure de lithium, d'hydrure de lithium-aluminium, de méthyllithium, de butyllithium, de t-butyllithium, de diisopropylamide de lithium, de sodium, d'hydrure de sodium, de borohydrure de sodium, de méthanolate de sodium, d'éthanolate de sodium ou de butylate de sodium, de méthanolate de potassium, d'éthanolate de potassium et/ou de butylate de potassium.

7. Procédé selon l'une ou plusieurs des revendications 1 à 6, **caractérisé en ce qu'**il s'agit, pour le catalyseur C, de métaux, d'hydrures métalliques, d'hydroxydes métalliques et d'alcoolates métalliques et d'acides minéraux.

8. Procédé selon l'une ou plusieurs des revendications 1 à 7, **caractérisé en ce qu'**il s'agit, pour l'acrylonitrile (V) d'acrylonitrile, de méthacrylonitrile, de 2-cyanoacrylate d'éthyle, de 3-phénylacrylonitrile, de 2-méthyl-2-butène-nitrile.

9. Procédé selon l'une ou plusieurs des revendications 1 à 8, **caractérisé en ce qu'**il s'agit, pour l'alcool de formule générale M-OH, d'alcools organiques linéaires ou ramifiés, saturés et insaturés, monovalents, présentant une longueur de chaîne carbonée de C₁-C₁₈ et il s'agit, pour l'alcool de formule générale M'-OH, d'alcools organiques linéaires ou ramifiés, saturés et insaturés, polyvalents présentant une longueur de chaîne carbonée de C₁-C₁₈.

10. Préparation d'acides, d'esters et de sels d'acides dialkylphosphoniques monofonctionnalisés par carboxy selon l'une ou plusieurs des revendications 1 à 9 et utilisation consécutive de ces produits comme liant, réticulant ou, selon le cas, accélérateur lors du durcissement de résines époxy, de polyuréthanes et de résines de polyester insaturées, comme stabilisants de polymères, comme agents de phytoprotection, comme agents de séquestration, comme additif d'huile minérale, comme agent de protection contre la corrosion, dans des utilisations d'agents de lavage et de nettoyage et dans des utilisations électroniques.
